# EUROPEAN PATENT SPECIFICATION

(11) **EP 2 474 960 B1**
(45) Date of publication and mention of the grant of the patent: **26.05.2021**
(21) Application number: 10811969.4
(22) Date of filing: 26.08.2010
(51) Int. Cl.: G01V 8/20, B65G 1/00, F16P 3/14

(54) **MULTIPLE-OPTICAL-AXIS PHOTOELECTRIC SENSOR, AND SAFETY MANAGEMENT SYSTEM USING SAME**
PHOTOELEKTRISCHER SENSOR MIT MEHREREN OPTISCHEN ACHSEN UND SICHERHEITSVERWALTUNGSSYSTEM DAMIT
CAPTEUR PHOTOÉLECTRIQUE À PLUSIEURS AXES OPTIQUES ET SYSTÈME DE GESTION DE SÉCURITÉ UTILISANT LEDIT CAPTEUR

(30) Priority: 31.08.2009 JP 2009199493
(43) Date of publication of application: 11.07.2012
(73) Proprietor: Omron Corporation, Kyoto-shi, Kyoto 600-8530 (JP)
(72) Inventor: TAKAHARA Takayoshi, Kyoto-shi Kyoto 600-8530 (JP); OSAKO Kazunori, Kyoto-shi Kyoto 600-8530 (JP); AKAGI Tetsuya, Kyoto-shi Kyoto 600-8530 (JP); KIKUCHI Keisaku, Kyoto-shi Kyoto 600-8530 (JP); KOZAWA Ryo, Kyoto-shi Kyoto 600-8530 (JP); SATO Toshinori, Kyoto-shi Kyoto 600-8530 (JP)
(74) Representative: Horn Kleimann Waitzhofer Patentanwälte PartG mbB
(86) International application number: PCT/JP2010/064527
(87) International publication number: WO 2011/024920

(56) References cited:
- EP-A1- 1 873 442
- EP-A2- 1 876 383
- WO-A1-2006/135961
- JP-A- 2002 338 031
- JP-A- 2004 230 455
- JP-A- 2007 222 979
- US-A1- 2002 017 603

## Description

### TECHNICAL FIELD

The present invention relates to a multiple-optical-axis photoelectric sensor and a safety management system using the same.

### BACKGROUND ART

Because the multiple-optical-axis photoelectric sensor is used to stop a machine when a body of a worker enters a danger zone, the multiple-optical-axis photoelectric sensor outputs a signal that is generally put into an on-state (usually high level) when all optical axes are in light entrance states and put into an off-state (usually low level) when the optical axis in a light obstruction state is generated. However, in order to prevent the stopping of the machine in carrying in a workpiece used in the danger zone, conventionally a function (generally what is called "muting") of ignoring the light obstruction state of the optical axis under a predetermined condition to maintain an output in the on-state is provided in this kind of sensor.

Generally workpiece detecting sensors (hereinafter referred to as a "muting sensor") are disposed in front of and at the back of a detection area of the multiple-optical-axis photoelectric sensor in order to utilize the muting function. For example, Patent Document 1 describes that two uniaxial type photoelectric sensors are disposed on each of a safety region side and the danger zone side, the muting is started from a time point at which the two photoelectric sensors on the safety region side become the light obstruction state, and the muting state is maintained until the photoelectric sensor located on the most downstream side becomes the off-state.

Patent Document 2 describes that a direction in which the optical axes of the multiple-optical-axis photoelectric sensor are arrayed is aligned with a length direction of a passage connected to the danger zone and the muting state is set when the optical axis in the light obstruction state moves while maintaining a predetermined pattern.
EP 1 876 383 A2 describes a safety barrier for controlling a passage zone comprising safety sensor means for detecting a body moved along a movement plane and passing through said passage zone and muting sensor means for temporarily disabling said safety sensor means when a body authorized passes through said passage zone, said muting sensor means being arranged transversely to said movement plane.

### PRIOR ART DOCUMENTS

### PATENT DOCUMENTS

Patent Document 1: Japanese Unexamined Patent Publication No. 2006-284355
Patent Document 2: Japanese Unexamined Patent Publication No. 2004-5542

### SUMMARY OF THE INVENTION

### PROBLEMS TO BE SOLVED BY THE INVENTION

In the case that the general-purpose sensor is used as the muting sensor like Patent Document 1, it is necessary to fix an interval between the muting sensor according to a length of the workpiece or a workpiece conveying speed. Because sometimes the worker intentionally puts the muting sensor into the light obstruction state (for example, a projector is covered with a tape), it is necessary that the interval between the muting sensors be derived from computation such that the muting is set only when a sensing output of each sensor changes with a given pattern. Therefore, it takes a lot of trouble installation of the muting sensor, and possibly the previous setting cannot be used when the length of the workpiece or the workpiece conveying speed changes.

In the methods of Patent Documents 1 and 2, because a constant height position of the workpiece is detected, a trouble is generated in detecting the workpiece having a hole made in a detection target position or the workpiece that does not reach a level of the detection target position. Therefore, it is difficult to set the multiple workpieces having different shapes or heights to the muting target.

In view of the foregoing, a problem of the present invention is to reduce work necessary to install the muting sensor and to easily deal with the change in shape or height of the workpiece of muting target.

### MEANS FOR SOLVING THE PROBLEMS

A safety management system according to the invention is proposed in claim 1 and includes at least two multiple-optical-axis photoelectric sensors each of which includes a projector and an optical receiver, the projector and the optical receiver being provided upright while facing each other across a conveyance path for an object conveyed toward a danger zone, one of the two multiple-optical-axis photoelectric sensors located on a downstream side in a conveyance direction of the object acts as a safety management sensor that controls driving of a machine in the danger zone, the safety management sensor being arranged to output a signal that is set to an on-state when all optical axes of the safety management sensor are in a light entrance state, and that is set to an off-state when at least one of the optical axes is in a light obstruction state, and the other multiple-optical-axis photoelectric sensor acts as a muting sensor with respect to the safety management sensor.

The safety management system includes: detection-pattern accumulation means for accumulating detection-pattern information representing a light entrance/obstruction pattern of each optical axis of the muting sensor while at least one of the optical axes of at least the muting sensor is in the light obstruction state; and control means for determining whether a change in the light entrance/obstruction pattern of each optical axis of the safety management sensor matches with (is consistent with) a change indicated by the detection-pattern information accumulated by the detection-pattern accumulation means while at least one of the optical axes of the safety management sensor is in the light obstruction state, for setting an output from the safety management sensor to the on-state when determining that the changes match with each other, and for setting the output from the safety management sensor to the off-state when determining that the changes do not match each other.

According to the above configuration, the safety management sensor can be set to the muting state when the same change as that generated in the muting sensor before a predetermined time in the light entrance/obstruction pattern of each optical axis while the safety management sensor detects the object. Because the projector and the optical receiver of each sensor are provided upright, the change in light entrance/obstruction pattern is generated in each sensor according to the shape of the workpiece as long as the workpiece has a height lower than the heights of the projector and the optical receiver, and the changes are matched with each other to enable the muting state to be set. Therefore, the safety management system can easily deal with the multiple workpieces having the different heights and shapes.

On the other hand, in the case that a moving target such as a human passes through a detection area of each sensor, the changes in light entrance/obstruction patterns of the sensors are not matched with each other, thereby preventing the muting state from being set to the safety management sensor. Because the light entrance/obstruction pattern necessary to set the muting state depends on the workpiece, it is extremely difficult to artificially set the muting state.

Desirably the detection-pattern accumulation means and the control means include a computer provided with a memory. The detection-pattern accumulation means and the control means can be incorporated in a body (projector or optical receiver) of the safety management sensor or the muting sensor. Alternatively, the detection-pattern accumulation means and the control means may be incorporated in a device, which can conduct communication with the sensor, while separated from the sensor.

In the invention, every time the light entrance/obstruction pattern of the optical axes of the muting sensor changes, the detection-pattern accumulation means stores detection-pattern information representing a post-change pattern while at least one of the optical axes of the muting sensor is in the light obstruction state. While at least one of the optical axes of the safety management sensor is in the light obstruction state, the control means repeatedly performs a process of comparing the latest light entrance/obstruction pattern for each optical axis of the safety management sensor with the detection-pattern information accumulated in the detection-pattern accumulation means in a chronological order until a pattern matching with the latest light entrance/obstruction pattern is extracted, and the control means deletes the detection-pattern information that does not match with the latest light entrance/obstruction pattern. The control means sets the output from the safety management sensor to the on-state when the detection-pattern information matching with the latest light entrance/obstruction pattern is extracted, and the control means sets the output from the safety management sensor to the off-state when the information accumulated in the detection-pattern accumulation means runs out before the detection-pattern information matching with the latest light entrance/obstruction pattern is extracted.

According to the above mode, every time the light entrance/obstruction pattern changes in the muting sensor, the detection-pattern information indicating the post-change pattern is stored in the detection-pattern accumulation means, so that the memory capacity necessary to accumulate the detection-pattern information can be reduced. The detection-pattern information that is not matched with the pattern of the matching target is deleted while matching the latest light entrance/obstruction pattern on the safety management sensor side with the pieces of accumulated information in the chronological order. Therefore, when the information matched with the pattern of the matching target exists in the pieces of accumulated information, the information matched with the pattern of the matching target is efficiently and securely extracted, and the output from the safety management sensor can be set to the on-state. On the other hand, when the information matched with the pattern of the matching target cannot be extracted, all the pieces of information accumulated in the detection-pattern accumulation means are deleted. Therefore, in the case that the changes in light entrance/obstruction patterns of the sensors are not matched with each other, the repetition of the useless matching can be prevented to maintain the output from the safety management sensor in the off-state.

Another preferred mode of the safety management system further includes reset means for detecting a transfer from a state in which at least one of the optical axes of at least the muting sensor is in the light obstruction state to the state in which all the optical axes of each sensor are in the light entrance state based on the light entrance/obstruction pattern of each optical axis for the individual times in the safety management sensor and the muting sensor, and for clearing the information accumulated in the detection-pattern accumulation means in response to this detection.

According to the above mode, the information accumulated in the detection-pattern accumulation means is cleared when an object other than the workpiece, which enters the detection area of the muting sensor, moves in the opposite direction to the workpiece conveying direction to exit from the detection area of the muting sensor without entering the detection area of the safety management sensor. In the case that the object is reversed after reaching the detection area of the safety management sensor, similarly the accumulated information is cleared at the time point at which the object exits from the detection area of the muting sensor. Therefore, the trouble that the detection-pattern information generated by the object of which the conveying direction is reversed is retained to lengthen the matching time with the latest light entrance/obstruction pattern can be prevented to enhance the efficiency and accuracy of the object detecting processing.

However, in the case that this mode is applied, it is necessary that the interval between the safety management sensor and the muting sensor do not exceed the length of the workpiece.

In another preferred mode of the safety management system, every time the light entrance/obstruction pattern of the optical axes of the muting sensor changes, the detection-pattern accumulation means stores detection-pattern information indicating a post-change (changed) pattern while at least one of the optical axes of the muting sensor is in the light obstruction state. While at least one of the optical axes of the safety management sensor is in the light obstruction state, the control means performs a process of comparing the latest light entrance/obstruction pattern for each optical axis of the safety management sensor with the detection-pattern information that is accumulated from a time point that is a predetermined period of time prior to the current time point in the detection-pattern information accumulated by the detection-pattern accumulation means, and the controls means extracts the detection-pattern information matching with the latest light entrance/obstruction pattern. A width of the time traced back for the purpose of the matching can be derived from a distance between the sensors or a workpiece conveying speed.

According to the above mode, even if a considerable amount of detection-pattern information is accumulated in the detection-pattern accumulation means, the matching of the pattern of the matching target can be performed using the detection-pattern information that is accumulated when the object currently detected by the safety management sensor is detected by the muting sensor. Therefore, the time necessary for the matching is shortened, and the output of the safety management sensor can stably be controlled.

In another preferred mode of the safety management system, the control means performs the comparison process while a predetermined permissible error is provided between the latest light entrance/obstruction pattern and the detection-pattern information accumulated in the detection-pattern accumulation means with respect to a boundary position of the optical axes in the light obstruction state and the optical axes in the light entrance state. Accordingly, the accuracy of the matching can be secured even if the boundary position of the optical axis in the light obstruction state and the optical axis in the light entrance state is slightly deviated by a vibration of the conveyance path or a difference in sensitivity of each sensor.

Another preferred mode of the safety management system further includes registration means for registering, as reference data, a set of detection-pattern information that represents a change in the light entrance/obstruction pattern generated in the optical axes of the muting sensor while the object that is permitted to be conveyed to the danger zone passes through a detection area of the muting sensor. The control means includes means for comparing the detection-pattern information of the muting sensor with the reference data while at least one of the optical axes of the muting sensor is in the light obstruction state, and the control means sets the output from the safety management sensor to the off-state when the control means determines due to this comparison that the detection-pattern information does not match with the reference data.

According to the above mode, in the case that the changes in light entrance/obstruction patterns of the sensors are not matched with the reference data registered in the registration means even if the changes in light entrance/obstruction patterns of the sensors are matched with each other, the output from the safety management sensor is set to the off-state. Therefore, the muting state is prevented from being set to the object that is not permitted to be carried in the danger zone, so that the safety can further be enhanced.

In another preferred mode of the safety management system, the detection-pattern accumulation means and the control means are provided in the safety management sensor, and communication means for conducting communication between the safety management sensor and the muting sensor is provided in each of the safety management sensor and the muting sensor. The muting sensor transmits the detection-pattern information indicating the light entrance/obstruction pattern of each optical axis of the muting sensor to the safety management sensor through the communication means, and the detection-pattern accumulation means of the safety management sensor inputs and accumulates the detection-pattern information transmitted from the muting sensor.

According to the above mode, the safety management sensor side can receive and accumulate the detection-pattern information from the muting sensor and therein while determining whether the accumulated information is matched with the light entrance/obstruction pattern of the safety management sensor. Therefore, the processing efficiency is enhanced and the processing of controlling the output can stably be performed in synchronization with the object detection.

In another preferred mode of the safety management system, each of the safety management sensor and the muting sensor includes a nonvolatile memory in which the detection-pattern information representing the latest light entrance/obstruction pattern of the optical axes of each of the safety management sensor and the muting sensor is stored. A muting state flag indicating that output is set to the on-state while at least one of the optical axes of the safety management sensor is in the light obstruction state is stored in the nonvolatile memory of the safety management sensor. When the muting state flag is set to the on-state at the time point at which the safety management sensor is activated, the control means maintains the setting of the muting state flag to set the output of the safety management sensor to the on-state on a condition that at least one of the optical axes of the safety management sensor is in the light obstruction state and that the first light entrance/obstruction pattern in each sensor after the power-on matches with the detection-pattern information stored in the respective nonvolatile memory. On the other hand, the control means resets the muting state flag to set the output of the safety management sensor to the off-state when that condition is not met.

In the conventional production line in which a general-purpose sensor is used as the muting sensor, when the production line is restarted after stopped during a rest or at closing time, it is necessary to set the output from the safety management sensor to the off-state in order to secure the safety. Therefore, even if the conveyance path or the sensor is stopped while the muting state is set, the output from the safety management sensor is set to the off-state without returning to the muting state in the restart. However, in this case, when the conveyance path or the sensor is stopped while the safety management sensor remains in the muting state, it is necessary that the restart be performed after the workpiece is returned to the position in front of the detection region of the muting sensor.

On the other hand, according to the above mode, even if the system is stopped while remaining in the muting state, the muting state can be set as long as the light entrance/obstruction pattern of each sensor in the restart is identical to that of the case immediately before the system is stopped. Therefore, it is not necessary to move the workpiece, so that the efficiency and user-friendliness can be improved. In the case that the pieces of information accumulated in the detection-pattern accumulation means is stored in the nonvolatile memory, the matching of the light entrance/obstruction pattern immediately after the power-on of the muting sensor with the latest information in the pieces of accumulated information may be performed.

In another preferred mode of the safety management system, a plurality of multiple-optical-axis photoelectric sensors each of which includes the detection-pattern accumulation means, the control means, and the communication means are disposed as the safety management sensors along the conveyance path for the object, and the muting sensor including the communication means is disposed on an upstream side of the safety management sensors in the conveying direction of the object. In this case, each safety management sensor inputs and accumulates the detection-pattern information of the muting sensor by the communication with the muting sensor. Therefore, each safety management sensor determines whether the change in light entrance/obstruction pattern of the safety management sensor is identical to the change generated in the muting sensor, and can control the output thereof based on the determination.

In another preferred mode of the safety management system, one safety management sensor including the detection-pattern accumulation means, the control means, and the communication means and two muting sensors each of which includes the communication means are disposed along the conveyance path for the object conveyed toward the danger zone while the safety management sensor is located between the muting sensors, and the detection-pattern accumulation means accumulates the detection-pattern information transmitted from one of the two muting sensors, the detection-pattern information indicating that the optical axis in the light obstruction state exists.

In the two muting sensors of the above configuration, it is assumed that a first muting sensor is one that is located farther away from the danger zone, and it is assumed that a second muting sensor is one that is located closer to the danger zone. In the case that the object is carried in the danger zone, the first muting sensor, the safety management sensor, and the second muting sensor become the light obstruction states in this order. Therefore, in the safety management sensor, the detection-pattern information transmitted from the first muting sensor is accumulated to determine whether the light entrance/obstruction pattern in the safety management sensor is matched with the accumulated detection pattern, which allows the on-state/off-state of the output to be controlled. On the other hand, in the case that the object is carried out from the danger zone, the second muting sensor, the safety management sensor, and the first muting sensor become the light obstruction states in this order. Therefore, in the safety management sensor, the detection-pattern information transmitted from the second muting sensor is accumulated to determine whether the light entrance/obstruction pattern in the safety management sensor is matched with the accumulated detection pattern, which allows the on-state/off-state of the output to be controlled.

Thus, the system of the above mode can deal with both the case that the object is carried in the danger zone and the case that the object is carried out from the danger zone.

A multiple-optical-axis photoelectric sensor of the invention in which a plurality of optical axes are provided between a projector and an optical receiver that are provided opposite to each other, is proposed in claim 10. The multiple-optical-axis photoelectric sensor outputs a signal that is set to an on-state when all the optical axes are in a light entrance state, and that is set to an off state when at least one of the optical axes is in a light obstruction state. The multiple-optical-axis photoelectric sensor includes information input means and control means as a safety management sensor for the safety management system.

The information input means receives detection-pattern information by conducting communication with another multiple-optical-axis photoelectric sensor disposed as a muting sensor, the detection-pattern information representing a light entrance/obstruction pattern of the optical axes of the muting sensor. The control means determines whether a change in the light entrance/obstruction pattern of the axes matches with a change in the light entrance/obstruction pattern indicated by the detection-pattern information input into the information input means while at least one of the optical axes of the multiple-optical-axis photoelectric sensor is in the light obstruction state, sets the output signal to the on-state when the changes match with each other, and sets the output signal to the off-state when the changes do not match each other.

The multiple-optical-axis photoelectric sensor further includes detection-pattern accumulation means for storing post-change (changed) detection-pattern information every time the detection-pattern information that is input through communication with the muting sensor by the information input means changes. While at least one of the optical axes of the safety management sensor is in the light obstruction state, the control means repeatedly performs a process of comparing the latest light entrance/obstruction pattern for each optical axis of the safety management sensor with the detection-pattern information accumulated in the detection-pattern accumulation means in a chronological order until a pattern matching with the latest light entrance/obstruction pattern is extracted, the control means deletes the detection-pattern information that does not match with the latest light entrance/obstruction pattern, the control means sets the output signal from the safety management sensor to the on-state when the detection-pattern information matching with the latest light entrance/obstruction pattern is extracted, and the control means sets the output signal from the safety management sensor to the off-state when the information accumulated in the detection-pattern accumulation means runs out before the detection-pattern information matching with the latest light entrance/obstruction pattern is extracted.

Another preferred mode of the multiple-optical-axis photoelectric sensor further includes reset means for detecting a transfer from a state in which at least one of the optical axes of at least the muting sensor is in the light obstruction state to a state in which all the optical axes of each sensor are in the light entrance state based on the detection-pattern information input by the information input means and the light entrance/obstruction pattern of each optical axis in the safety management sensor and the muting sensor, and for resetting the information accumulated in the detection-pattern accumulation means based on the detection.

### EFFECTS OF THE INVENTION

The safety management system and the multiple-optical-axis photoelectric sensor of the invention can control the output signal to the danger zone while flexibly dealing with the change in shape or height of the workpiece. Because it is difficult to artificially set the muting state, it is not necessary to take a measure to exactly fix the interval between the safety management sensor and the muting sensor, and the safety can be enhanced.

### BRIEF DESCRIPTION OF THE DRAWINGS

Fig. 1 is a view illustrating an installation example of a safety management system.
Fig. 2 is a block diagram illustrating an electric configuration of the safety management system.
Fig. 3 is a view illustrating an example of detection-pattern information generated by each sensor.
Fig. 4 is a view illustrating a time-series change of a relationship between an optical axis of each sensor and a workpiece while the time-series change is correlated with a setting period of a muting permission flag and a muting state flag and an accumulation period of muting pattern information.
Fig. 5 is a view illustrating an example of accumulation information in a muting pattern table.
Fig. 6 is a flowchart illustrating a basic flow of processing of the safety management sensor.
Fig. 7 is a flowchart of processing of acknowledging a processing state.
Fig. 8 is a flowchart of processing of accumulating the muting pattern information.
Fig. 9 is a flowchart of processing of setting a flag.
Fig. 10 is a flowchart of output/indicating lamp control.
Fig. 11 is a view illustrating a state of a positional relationship between the workpiece and each sensor while the state of the positional relationship is divided into a plurality of stages.
Fig. 12 is a flowchart of start-up processing.
Fig. 13 is a view illustrating a configuration example of the safety management system aimed at corresponding with the workpiece carried in and out of a danger zone.

### EMBODIMENT FOR CARRYING OUT THE INVENTION

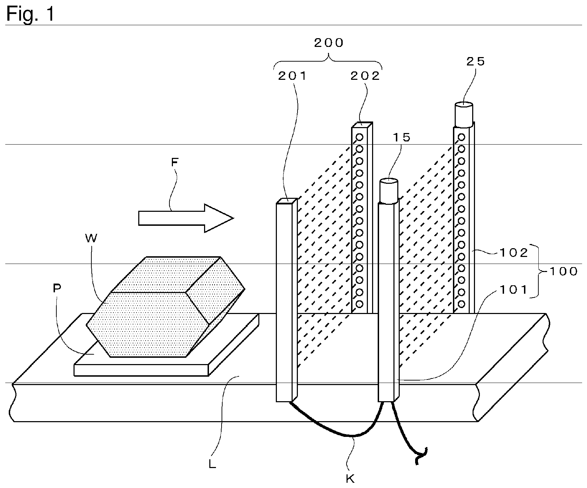

Fig. 1 is a view illustrating an example of a safety management system according to an embodiment of the invention.

The safety management system of the embodiment includes two multiple-optical-axis photoelectric sensors 100 and 200 that are provided in a conveyance path L of a workpiece W conveyed to a danger zone (not illustrated).

In each of the multiple-optical-axis photoelectric sensor 100 and 200, a projector 101 or 201 and an optical receiver 102 or 202 are disposed across the conveyance path L from each other provided upright. In each of the sensors 100 and 200, an optical axis of the projector is aligned with an optical axis of the optical receiver on a one-to-one basis to form a two-dimensional detection area of the optical axes.

In Fig. 1, the workpiece W is conveyed along a direction of an arrow F while supported by a pallet P. The multiple-optical-axis photoelectric sensor 100 provided on a downstream side (danger zone side) in the conveying direction is connected to a power supply circuit of a machine as a safety management sensor that stops the machine in the danger zone when an object except the workpiece W moves in the danger zone. On the other hand, the multiple-optical-axis photoelectric sensor 200 on an upstream side of the safety management sensor 100 acts as a muting sensor with respect to the safety management sensor 100. In order to announce that the projector 101 and the optical receiver 201 are in a muting state, indicating lamps 15 and 25 are provided on the tops of the projector 101 and the optical receiver 102 of the safety management sensor 100, respectively.

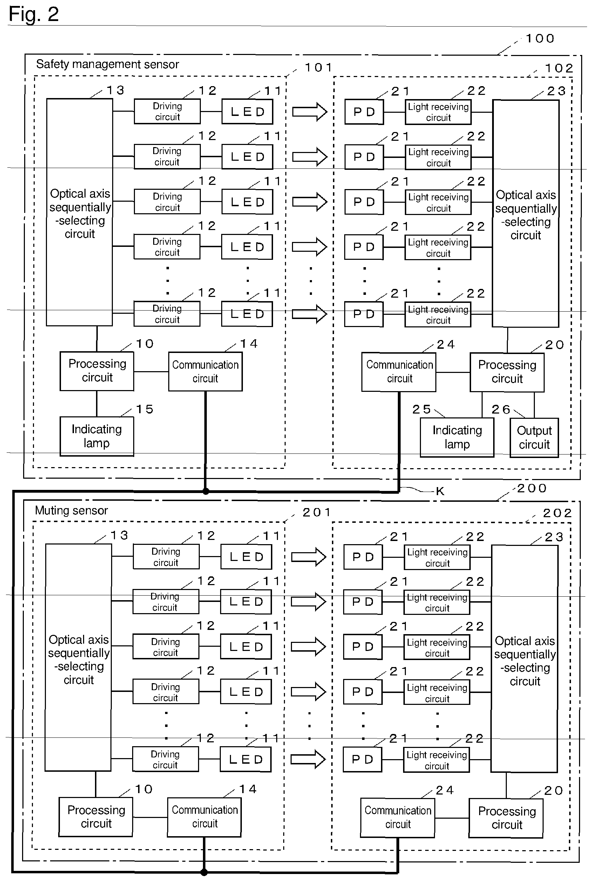

Fig. 2 illustrates an electric configuration of the safety management system. In Fig. 2, the component common to the sensors 100 and 200 is designated by the same numeral.

A plurality of LEDs 11 are incorporated as light emitting elements in each of the projectors 101 and 201 of the sensors 100 and 200. A plurality of driving circuits 12 corresponding to the light emitting elements 11, an optical axis sequentially-selecting circuit 13, a processing circuit 10, and a communication circuit 14 are provided in each of the projectors 101 and 201. A plurality of photodiodes (PDs) 21 are provided as light receiving elements in the each of the optical receivers 102 and 202 of the sensors 100 and 200. A plurality of light receiving circuits 22 corresponding to the light receiving elements 21, an optical axis sequentially-selecting circuit 23, a processing circuit 20, and a communication circuit 24 are provided in the each of the optical receivers 102 and 202. The indicating lamps 15 and 25 and driving circuits (not illustrated) thereof are provided in the projector 101 and the optical receiver 102 of the safety management sensor 100.

An output circuit 26 is provided in the optical receiver 102 of the safety management sensor 100. The output circuit 26 is connected to a switch mechanism (such as a relay) in the power supply circuit. When the output circuit 26 outputs a high-level signal, the switch mechanism is closed to supply an electric power to the machine in the danger zone. When the output circuit 26 outputs a low-level signal, the switch mechanism is opened to stop the machine.

Each of the processing circuits 10 and 20 includes a CPU (not illustrated) and a nonvolatile memory (not illustrated). Each of the processing circuits 20 of the optical receivers 102 and 202 also includes an A/D conversion circuit that converts input signal of a light receiving amount into a digital signal.

The communication circuits 14 and 24 of each of the projectors 101 and 201 and each of the optical receivers 102 and 202 are connected to each other through a communication line K. Therefore, the processing circuits 10 and 20 of each of the projectors 101 and 201 and each of the optical receivers 102 and 202 can conduct communication with processing circuits 14 and 24 of another machine through the communication circuit 14 and 24 thereof, respectively. For the sake of convenience, only the communication is conducted between the optical receivers 102 and 202 of each of the sensors 100 and 200 in addition to the communication between the pair of the projector and the optical receiver (between the projector 101 and the optical receiver 102, and between the projector 201 and the optical receiver 202).

The optical axis sequentially-selecting circuits 13 and 23 of each of the projectors 101 and 201 and each of the optical receivers 102 and 202 are gate circuits each of which sequentially validates the optical axis. In each sensor, the light emitting element 11 corresponding to the optical axis selected by each of the sides of the projectors 101 and 201 while switching timing of each of the optical axis sequentially-selecting circuits 13 and 23 is synchronized by the communication between the projector and the optical receiver, and the signal of the light receiving amount is input to the processing circuit 20 from the light receiving element 21 corresponding to the optical axis selected by each of the sides of the optical receivers 102 and 202. In the processing circuits 20 of the optical receivers 102 and 202, after a level of the light receiving amount is obtained by converting the input signal of the light receiving amount into the digital signal, whether each optical axis is in a light entrance state or a light obstruction state is determined by comparing the level of the light receiving amount to a predetermined threshold. A binary data, in which the light entrance state is set to "0" while the light obstruction state is set to "1", is generated and stored in a work area (hereinafter referred to as a "work memory") of the nonvolatile memory.

Hereinafter processing of sequentially selecting the optical axes, of performing the light transmission and the light reception in the selected optical axis, and of distinguishing the light entrance state and the light obstruction state from each other from the level of the light receiving amount is referred to as "detection processing".

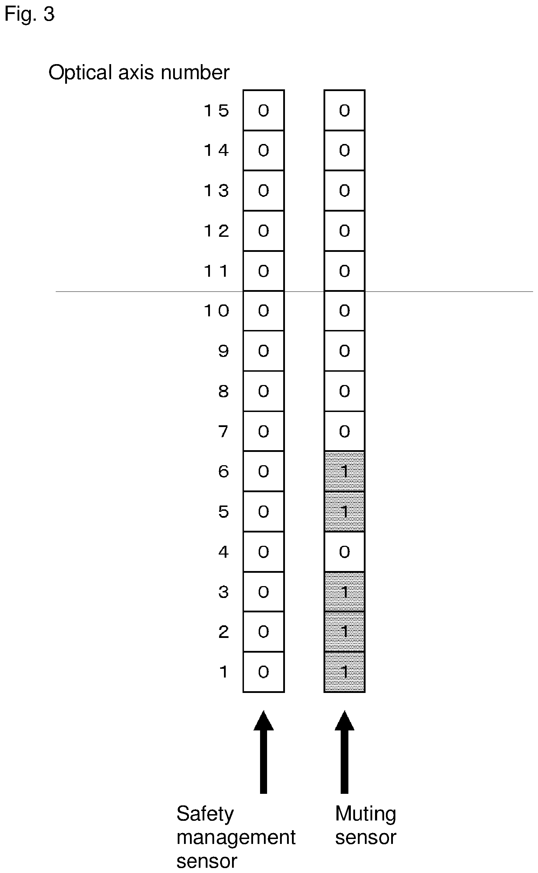

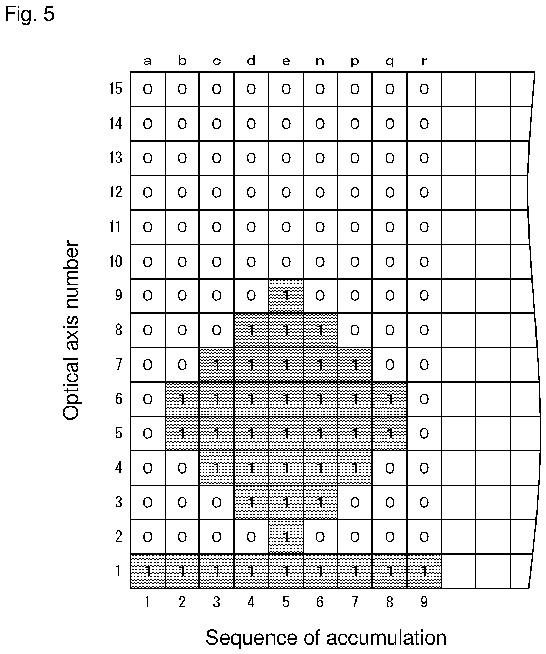

Fig. 3 is a view schematically illustrating data that is stored in the work memory by the detection processing performed in each sensor. In Fig. 3, the number of optical axes of each of the sensors 100 and 200 is set to 15, the binary data indicating a detection result in each optical axis is expressed by a rectangular frame in which a numeric character of "0" or "1" is inserted, and the number of optical axes and the pieces of binary data are vertically arrayed in association with the actual array of optical axes. The numbers 1 to 15 (hereinafter referred to as an "optical axis number") are correlated with the pieces of data, and the rectangular frame of the data to which "1" indicating the light obstruction state is set is expressed by a halftone pattern (the same holds in Fig. 5).

The set of pieces of binary data corresponds to a light entrance/obstruction pattern of each optical axis detected by the detection processing of one cycle. Therefore, hereinafter the set of pieces of binary data is referred to as detection-pattern information. In the example of Fig. 3, the detection-pattern information of the safety management sensor 100 indicates that all the optical axes are in light entrance states (hereinafter referred to as a "all-optical-axis light entrance state"), and the detection-pattern information of the muting sensor 200 indicates that the first to third, fifth, and sixth optical axes are in the light obstruction states.

In each of the sensors 100 and 200, the detection-pattern information is updated to the latest detection result every time the detection processing of one cycle is performed. However, every time the detection processing of one cycle is performed by the sensor 200, the detection-pattern information generated by the muting sensor 200 is transmitted from the muting sensor 200 to the safety management sensor 100 through the communication between the optical receivers 102 and 202, and the detection-pattern information is accumulated in the nonvolatile memory of the processing circuit 20 of the optical receiver 102. Hereinafter, the detection-pattern information transmitted from the muting sensor 200 to the safety management sensor 100 is referred to as "muting pattern information", and the area where the muting pattern information is accumulated is referred to as a "muting pattern table".

In the processing circuit 20 of the optical receiver 102 of the safety management sensor 100, the output from the output circuit 26 is set to an on-state (high level) when the detection-pattern information generated by the safety management sensor 100 indicates the all-optical-axis light entrance state illustrated in Fig. 3. On the other hand, the output from the output circuit 26 is set to an off-state (low level) when the detection-pattern information of the safety management sensor 100 includes at least one piece of data "1" indicating the light obstruction state. Therefore, when at least one of the optical axes of the safety management sensor 100 becomes the light obstruction state, an electric power path to the machine is cut off to stop the machine.

However, when the detection-pattern information on the optical axis in the light obstruction state is matched with the detection-pattern information stored in the muting pattern table even if the optical axis in the light obstruction state is generated in the safety management sensor 100, a muting state is set, and the output from the output circuit 26 is set to the on-state. The indicating lamps 15 and 25 are set in lighting state according to the setting of the muting state.

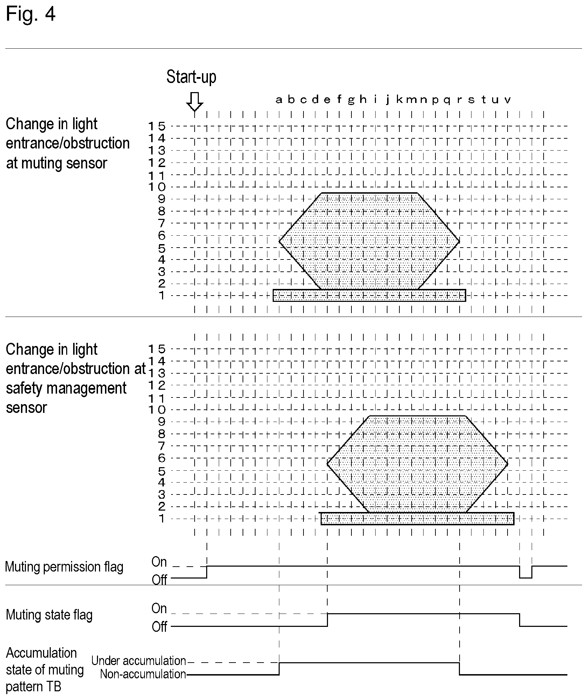

Fig. 4 schematically illustrates a change of a relationship between the optical axis and the workpiece W while one piece of the workpiece W and the pallet P of Fig. 1 (hereinafter the one piece is referred to as a "workpiece W" passes through the detection area between the two types of the sensors 100 and 200. In Fig. 4, a horizontal direction is set to a temporal axis, and timing in which the detection processing is performed to each optical axis is indicated by a straight line (broken line) along the vertical direction. The optical axis of each sensor is indicated by a straight line (dotted line) along a horizontal direction, and a schematic graphic (entire image including the pallet P is expressed by the halftone pattern) of the workpiece W is located at an intersection of the vertical and horizontal straight lines. The detection processing is designated by the numerals a to v (except the numerals I and o) when the optical axis in the light obstruction state exists in at least one of the sensors 100 and 200. Hereinafter the timing indicated by each of the numerals is expressed like a " time a" for the sake of convenience.

Referring to Fig. 4, the light obstruction state is detected in a period from a time a to a time r in the muting sensor 200, and the light obstruction state is detected in a period from a time e to a time v in the safety management sensor 100. The same change as the muting sensor 200 is generated in the light entrance/obstruction pattern of the safety management sensor 100 while delayed by 4 cycles with respect to the muting sensor 200.

Fig. 4 also illustrates a period in which the muting pattern information is accumulated and a period in which two types of flags (muting permission flag and muting state flag) relating to the setting of the muting state are set to an on-state while the periods correspond to the time-series change of the relationship between each optical axis and the workpiece W.

The muting permission flag indicates that the muting state can be set. After the sensors 100 and 200 are started up, the muting permission flag is set to the on-state on the condition that the output of the safety management sensor 100 is in the on-state while both the sensors 100 and 200 are in the all-optical-axis light entrance states. The muting state flag indicates that the muting state is set. The muting state flag is set to the on-state, when the muting permission flag is set to the on-state, when at least one of the optical axes of the safety management sensor is in the light obstruction state 100, and when the muting pattern information matched with the detection-pattern information on the optical axis in the light obstruction state is detected. The output of the output circuit 26 and operations of the indicating lamps 15 and 25 are controlled based on the setting state of the muting state flag and the latest detection-pattern information of the safety management sensor 100.

Fig. 5 illustrates contents of the muting pattern information accumulated in the muting pattern table of the safety management sensor 100 in the case that each optical axis of the muting sensor 200 is blocked as illustrated in Fig. 4. In Fig. 5, each piece of muting pattern information is correlated with a numerical value indicating an accumulated sequence and a numeral (corresponding to the numeral of Fig. 4) indicating the time the detection processing corresponding to the muting pattern information is performed.

In the safety management sensor 100 of the embodiment, every time the detection processing is performed in the muting sensor 200, the detection-pattern information generated through the detection processing in the muting sensor 200 is received as the muting pattern information. However, as illustrated in Fig. 4, the accumulation is not performed while the muting pattern information indicates the all-optical-axis light entrance state, but the accumulation is performed only while the muting pattern information indicating the light obstruction state is obtained.

Even in the accumulation period, all the pieces of muting pattern information indicating the light obstruction state are not stored, but the muting pattern information is stored when the muting pattern information different from the latest muting pattern information in the muting pattern table is obtained, in other words, when the muting pattern information changes.

Specifically, the embodiment will be described with reference to Figs. 4 and 5. The storage of the muting pattern information is started from the time a the light obstruction is started in the detection area of the muting sensor 200. In the muting sensor 200, after the time a the muting pattern information is stored, because the light entrance/obstruction pattern different from that at a preceding stage is detected at each of the times b, c, d, and e, the pieces of muting pattern information corresponding to the times b, c, d, and e are sequentially stored in the muting pattern table.

Then, at each of the times f, g, h, i, j, k, and m, because the light entrance/obstruction pattern detected by the muting sensor 200 becomes identical to that at the time e, the muting pattern information is not stored. However, at each of the subsequent times n, p, q, and r, because the light entrance/obstruction pattern of the muting sensor 200 changes again, the pieces of muting pattern information corresponding to the subsequent times n, p, q, and r are sequentially stored in the muting pattern table.

As described above, only when the light entrance/obstruction pattern of the muting sensor 200 changes, the muting pattern information indicating the post-change state is stored in the muting pattern table, so that a capacity of the muting pattern table can be reduced. In the case that the safety management sensor 100 matches the muting pattern table with the detection-pattern information thereof, the matching is performed in the chronological order of the detection-pattern information, and the detection-pattern information that is not matched with the muting pattern table is deleted from the muting pattern table, so that efficiency and accuracy of matching processing can be secured.

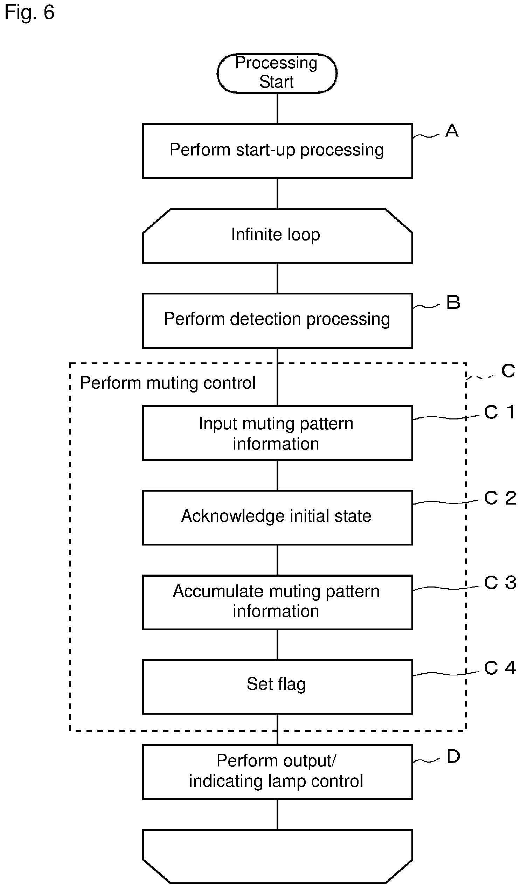

Fig. 6 illustrates a basic procedure of processing performed by the safety management sensor 100. According to the flowchart of Fig. 6, in the safety management sensor 100, after start-up processing (Step A) is performed in response to the power-on, an infinite loop including the detection processing (Step B), muting control (Step C), and output/indicating lamp control (Step D) is repeatedly performed.

The start-up processing in Step A includes processing of initially setting various parameters including the output signal from the output circuit 26, the muting permission flag, and the muting state flag. In this stage, in order to secure safety, an initial value of each flag is set to the off-state in principle while the output signal is set to the off-state.

In Step B, the optical axes are sequentially selected, light transmission processing and light reception processing are performed in the selected optical axis, the level of the light receiving amount is compared with the predetermined threshold to determine the light entrance/obstruction. Therefore, the detection-pattern information illustrated in Fig. 3 is generated and stored in the work memory.

The muting control in Step C includes processing of inputting the muting pattern information from the muting sensor 200 (Step C1), processing of acknowledging the initial state (Step C2), processing of accumulating the muting pattern information (Step C3), and processing of setting the flag (Step C4). In the Step D, the output signal is set to one of the on-state and the off-state based on the muting state flag and the detection-pattern information of the safety management sensor 100. Processing of lighting or turning off the indicating lamps 15 and 25 is also performed according to the value of the muting state flag.

Although not illustrated, in the muting sensor 200, after the processing of initially setting the parameters and the like are performed in response to the power-on, an infinite loop including the detection processing having the same contents as those in Step B and processing of transmitting the detection-pattern information generated through the detection processing to the safety management sensor 100 is repeatedly performed. The transmitted detection-pattern information is received as the muting pattern information through the processing in Step C1 on the side of the safety management sensor 100.

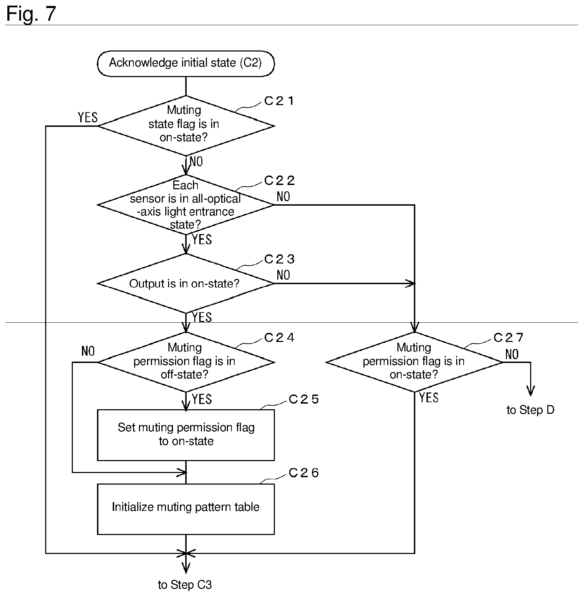

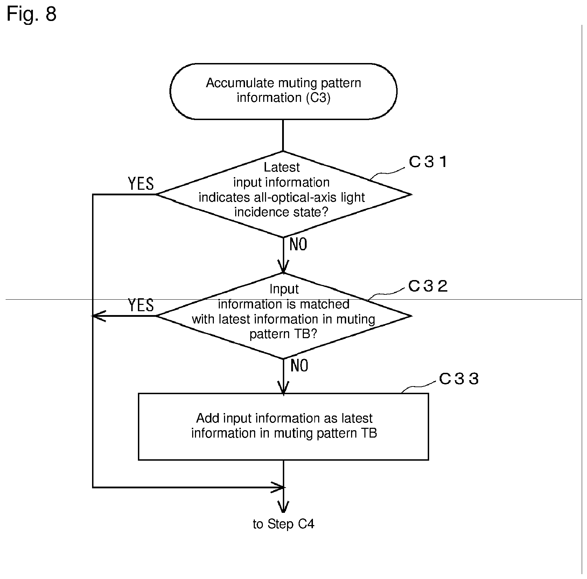

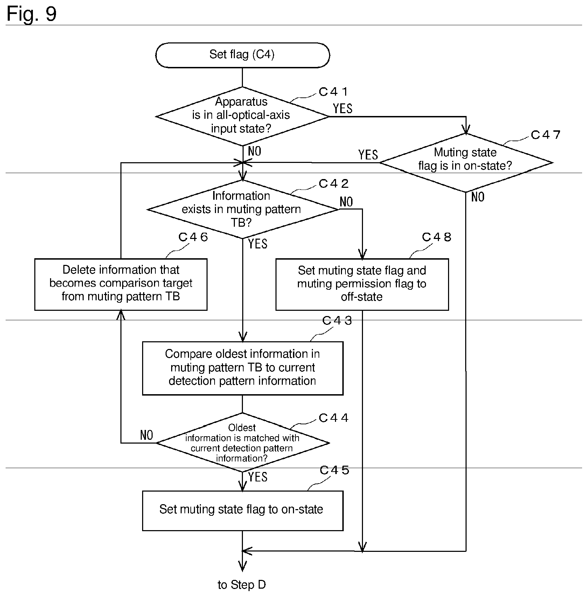

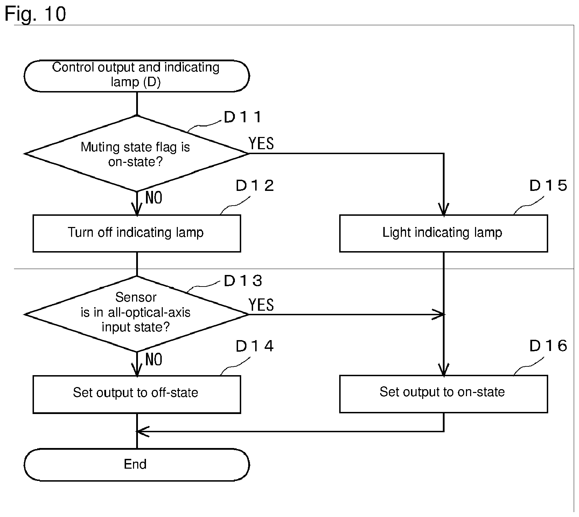

Fig. 7 illustrates a detailed procedure (Steps C21 to C26) of the initial-state acknowledging processing in Step C2, Fig. 8 illustrates a detailed procedure (Steps C31 to C33) of the accumulation processing in Step C3, Fig. 9 illustrates a detailed procedure (Steps C41 to C48) of the flag setting processing in Step C4, and Fig. 10 illustrates a detailed procedure (Steps D11 to D16) of the output/indicating lamp control in Step D.

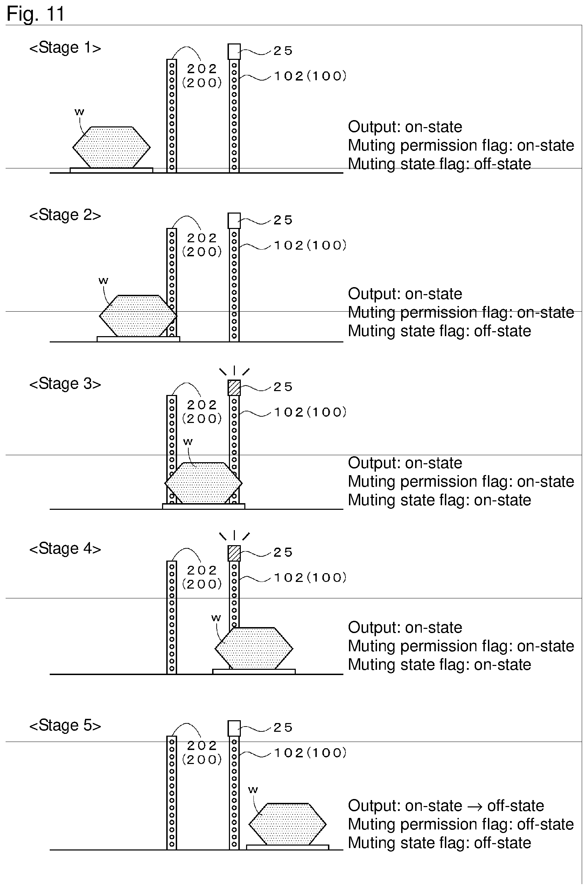

Fig. 11 illustrates a state of a positional relationship between each sensor and the workpiece W while the state of the positional relationship is divided into a plurality of stages.

The processing performed in each stage of Fig. 11 by the safety management sensor 100 will be described in detail with reference to the flowcharts of Figs. 6 to 10.

### <Stage 1>

A stage 1 corresponds to a period since the sensors 100 and 200 are started up until the workpiece W reaches the detection area of the muting sensor 200, namely, a period in which both the muting sensor 200 and the safety management sensor 100 become the all-optical-axis light entrance states.

The muting permission flag, the muting state flag, and the output from the output circuit 26 are set to the off-state by the start-up processing (Step A) after the power-on, and the detection processing (Step B) and the input of the muting pattern information (Step C1) are performed for the first time. In the initial-state acknowledging processing in Step C2 (Fig. 7), a determination "NO" is made in Step C21, a determination "YES" is made in Step C22, and a determination "NO" is made in Step C23. Therefore, the flow goes to Step C27 to check the muting permission flag. At this point, because the muting permission flag is in the off-state, the determination "NO" is made in Step C27, and the flow skips Steps C3 and C4 to go to the output/indicating lamp control in Step D.

The output/indicating lamp control at this point will be described with reference to Fig. 10. Because the muting state flag is set to the off-state in the preceding start-up processing, the determination "NO" is made in Step D11, and the flow goes to Step D12 to turn off the indicating lamps 15 and 25. The determination "YES" is made in Step D13 because of the all-optical-axis light entrance state, the flow goes to Step D16 to set the output to the on-state.

Then, the flow returns to a head of the infinite loop, the second detection processing (Step B) and the second input of the muting pattern information (Step C1) are performed, and the flow goes to the initial-state acknowledging processing (Fig. 7) again. At this point, similarly to the first-time processing, the determination "NO" is made in Step D21, and the determination "YES" is made in Step C22. However, because the determination "YES" is made in Step C23, the flow goes to Step C24 to check the muting permission flag. Because the muting permission flag is in the off-state at this point, the determination "YES" is made in Step C24, and the flow goes to Step C25 to set the muting permission flag to the on-state. The muting pattern table is initialized in Step C26 (the muting pattern table is put into a state in which the accumulated information does not exist). Then the flow goes to the muting pattern accumulating processing in Step C3.

Referring to Fig. 8, whether the latest muting pattern information input from the muting sensor 200 indicates the all-optical-axis light entrance state is checked in the muting pattern accumulating processing (Step C31). Because the determination "YES" is made in Step C31 in the stage 1, the flow goes to the flag setting processing in Step C4 without performing Steps C32 and C33.

Referring to Fig. 9, in the flag setting processing, whether the safety management sensor 100 is in the all-optical-axis light entrance state is checked based on the latest detection-pattern information of the safety management sensor 100 (Step C41). Because the determination "YES" is made in Step C41 in the stage 1, the flow goes to Step C47 to acknowledge the muting state flag. At this point, because the muting state flag is in the off-state, the determination "NO" is made in Step C47. Therefore, the flow goes to the output/indicating lamp control in Step D (Fig. 10) without performing Steps C42 to C48.

Referring to Fig. 10, in the output/indicating lamp control, similarly to the case immediately after the start-up processing, the determination "NO" is made in Step D11 to turn off the indicating lamps 15 and 25 (Step D12). The determination "YES" is made in Step S13, and the flow goes to Step D16. Therefore, the on-state of the output is maintained.

During the stage 1, the processing is performed by the similar procedure. Therefore, the turn-off states of the indicating lamps 15 and 25 are maintained. The output and the muting permission flag are set to the on-state except the case immediately after the start-up processing. On the other hand, the muting state flag is set to the off-state.

### <Stage 2>

In a stage 2, although the workpiece W enters the detection area of the muting sensor 200, the workpiece W does not reach the detection area of the safety management sensor 100. Accordingly, the optical axis in the light obstruction state is generated in the muting sensor 200, and the safety management sensor 200 is still in the all-optical-axis light entrance state. Therefore, in the initial-state acknowledging processing (Fig. 7) in stage 2, the determination "NO" is made in Step C21, and the determination "NO" is made in Step C22. Then, the determination "YES" is made in Step C27, and the flow goes to the muting pattern accumulating processing (Fig. 8).

At this point, because the determination "NO" is made in Step C31 in the muting pattern accumulating processing, the flow goes to Step C32 to check whether the input muting pattern information is identical to the latest information in the muting pattern table. When the input muting pattern information differs from the latest information in the muting pattern table ("NO" in Step C32), the input muting pattern information is added to the tail end of the muting pattern table (Step C33), and the flow goes to the flag setting processing (Fig. 9). On the other hand, when the input muting pattern information is identical to the latest information in the muting pattern table ("YES" in Step C32), the flow skips Step C33 to go to the flag setting processing.

In the flag setting processing in the stage 2, similarly to the stage 1, the determination "YES" is made in Step C41, and the determination "NO" is made in Step C47. Therefore, the flow goes to the output/indicating lamp control without performing the substantial processing. In the output/indicating lamp control, because the processing is performed in the same procedure as the stage 1, the turn-off states of the indicating lamps 15 and 25 and the on-state of the output are maintained.

### <Stage 3>

In a stage 3, the workpiece W enters the detection area of the safety management sensor 100, and the workpiece W does not exit from the detection area of the muting sensor 200. Accordingly, the optical axis in the light obstruction state is generated in both the muting sensor 200 and the safety management sensor 100.

In the initial-state acknowledging processing (Fig. 7) performed immediately after the workpiece W enters the stage 3 (corresponding to the time e of Fig. 4), the determination "NO" is made in Step C21, the determination "NO" is made in Step C22, and the determination "YES" is made in Step C27. Therefore, the flow goes to the muting pattern accumulating processing (Fig. 8). In the muting pattern accumulating processing, the processing is performed in the same procedure as the stage 2, and the flow goes to the flag setting processing (Fig. 9).

In the flag setting processing, the determination "NO" is made in Step C41, and the determination "YES" is made in Step C42. Therefore, the flow goes to Step C43. In Step C43, the oldest information in the muting pattern table is compared to the detection-pattern information of the safety management sensor 100.

At this point, the description is made with reference to the examples of Figs. 4 and 5. Because the detection-pattern information generated at the time e immediately after the workpiece enters the stage 3 is matched with the oldest information (the first information, namely, the information generated at the time a by the muting sensor 200) in the muting pattern table, the determination "YES" is made in Step C44. Therefore, after the muting state flag is set to the on-state in Step C45, the flow goes to the output/indicating lamp control (Fig. 10).

In the output/indicating lamp control, the determination "YES" is finally made in Step D11, and processing of lighting the indicating lamp is performed (Step D15). The on-state of the output is maintained by performing Step D16.

Because the determination "YES" is made in Step C21 in the initial-state acknowledging processing (Fig. 7) in the stage 3 from the second time, the flow goes to the muting pattern accumulating processing (Fig. 8) in Step C3 without performing other Steps. In the muting pattern accumulating processing, as in the preceding processing, the input muting pattern information is compared to the latest information in the muting pattern table, and the input muting pattern information is added to the muting pattern table when the input muting pattern information differs from the latest information in the muting pattern table (Steps C31 to C33).

In the flag setting processing (Fig. 9), similarly to the previous time, the determination "NO" is made in Step C41, and the determination "YES" is made in Step C42, thereby performing the processing of comparing the oldest information in the muting pattern table to the detection-pattern information of the safety management sensor 100. For example, when the detection-pattern information generated at the time f is processed, the detection-pattern information is compared to the first information of Fig. 5. Because the detection-pattern information is not matched with the first information of Fig. 5, the determination "NO" is made in Step C44, and the flow goes to Step C46 to delete the first information that becomes the comparison target from the muting pattern table. The flow returns to Step C42 to acknowledge that the information exists in the muting pattern table updated by the deletion ("YES" in Step C42). Then the flow goes to Step C43 to compare the currently oldest information (second information of Fig. 5) to the detection-pattern information. Referring to Figs. 4 and 5, because the second information is matched with the detection-pattern information generated at the time f, the determination "YES" is made in Step C44, and the flow goes to Step C45. Therefore, the muting state flag is continuously maintained in the on-state.

In the case that the on-state of the muting state flag is maintained in the flag setting processing, in the output/indicating lamp control (Fig. 10), the determination "YES" is continuously made in Step D11 to perform steps D15 and D16. Therefore, the lighting states of the indicating lamps 15 and 25 and the on-state of the output are maintained.

It is assumed that the times g, h, and i are included in the stage 3. In the flag setting processing at the times g, h, and i, similarly to the time f, the detection-pattern information is not matched with the information (oldest information) of the first comparison target in the muting pattern table, and the information of the comparison target is deleted. Then, the flow goes to Step C45 when the detection-pattern information is matched with the information that newly becomes the comparison target.

On the other hand, in the case that the times j, k, m, n, p, q, and r are included in the stage 3, whether the detection-pattern information generated at each of time j, k, m, n, p, q, and r is matched with the information of the comparison target in the first Step C43 can be acknowledged.

As described above, in the stage 3, the matched information can be extracted from the muting pattern table with respect to each piece of detection-pattern information of the safety management sensor 100, so that the muting state flag that is set to the on-state immediately after the workpiece W enters the stage 3. Therefore, the lighting states of the indicating lamps 15 and 25 and the on-state of the output are maintained.

### <Stage 4>

In a stage 4, although the workpiece W exits from the detection area of the muting sensor 200, the workpiece W is still included in the detection area of the safety management sensor 100. Therefore, the muting sensor 200 returns to the all-optical-axis light entrance state, and at least one of the optical axes of the safety management sensor is in the light obstruction state 100.

In initial-state acknowledging processing (Fig. 7) in the stage 4, similarly to the stage 3, the determination "YES" is made in Step C21, and the flow goes to the muting pattern accumulating processing (Fig. 8) without performing other Steps. In the muting pattern accumulating processing, because the determination "YES" is made in Step C31, the flow goes to the flag setting processing (Fig. 9) without performing the specific processing.

In the flag setting processing, because the determination "NO" is made in Step C41, the current detection-pattern information of the safety management sensor 100 is matched with the information in the muting pattern table in the chronological order similarly to the stage 3. When the matching is acknowledged, the on-state of the muting state flag is maintained (Steps C42, C43, C44, and C45). When the muting pattern information of the comparison target is not matched with the detection-pattern information, the processing of deleting the muting pattern information is performed (Step C46).

When the flow goes to the output/indicating lamp control (Fig. 10) while the on-state of the muting state flag is maintained through the flag setting processing, the pieces of processing in Steps D11, D15, and D16 are performed similarly to the stage 3. Therefore, the lighting states of the indicating lamps 15 and 25 and the on-state of the output are also maintained in the stage 4.

### <Stage 5>

In a stage 5, the workpiece W exits from the detection area of the safety management sensor 100, and both the safety management sensor 100 and the muting sensor 200 become all-optical-axis light obstruction states. However, in the initial-state acknowledging processing (Fig. 7) immediately after the workpiece W enters the stage 5, because the muting state flag is still in the on-state, the determination "YES" is made in Step C21, and the flow goes to the muting pattern accumulating processing without performing the pieces of processing from Step C22. In the muting pattern accumulating processing, the flow goes to the flag setting processing (Fig. 9) without performing the substantial processing similar to the stage 4.

In the flag setting processing, unlike the stages 3 and 4, the determination "YES" is made in Step C41, and the flow goes to Step C47 to check whether the muting state flag is in the on-state. Because the determination "YES" is made in Step 47 immediately after the work piece W enters the Stage 5, the flow goes to Step C42 to check whether the information is stored in the muting pattern table. At this point, because at least the information (ninth information of Fig. 5) that finally becomes the comparison target in the stage 4 remains in the muting pattern table, the determination "YES" is made in Step C42 to perform Steps C43 and C44. However, because the current detection-pattern information indicating the all-optical-axis light entrance state is not matched with the muting pattern information, the determination "NO" is made in Step C44, and the flow goes to Step C46. Therefore, the final information remaining in the muting pattern table is deleted.

In the case that the muting pattern table becomes empty through the deletion processing, because the determination "NO" is made in Step C42 when the flow returns to Step C42, the flow goes to Step C48 to set the muting state flag and the muting permission flag to the off-state.

In the subsequent output/indicating lamp control, because the determination "NO" is made in Step D11 by performing Step C48, the indicating lamps 15 and 25 are turned off (Step D12). Because the determination "YES" is made in Step D13, the flow goes to Step D16 to set the output to the on-state.

In the initial-state acknowledging processing (Fig. 7) in performing the next infinite loop, after the determination "NO" is made in Step C21, the determination "YES" is made in Steps C22, C23, and C24. The flow goes to Step C25 from Step C24, the muting permission flag is set to the on-state again, and the muting pattern table is initialized (Step C26). Therefore, the safety management sensor 100 returns to the state immediately after the start-up, namely, the stage 1.

As described above, according to the procedures of Figs. 6 to 10, even if the light obstruction is generated in the detection area of the safety management sensor 100, as long as the muting pattern information matched with the detection-pattern information can be found, the muting state is set and the on-state of the output is maintained.

On the other hand, in the case that the moving object passes sequentially through the detection areas of the sensors, the pieces of processing are performed in the same way as the stages 1 and 2 until the object reaches the detection area of the safety management sensor 100. However, when the object enters the detection area of the safety management sensor 100, the detection-pattern information of the safety management sensor 100 is not matched with the muting pattern information accumulated in the muting pattern table. Therefore, in the flag setting processing of Fig. 9, the loop including Steps C42, C43, C44, and C46 is repeatedly performed, and the muting pattern table becomes empty at a predetermined time, whereby the flow goes to Step C48. Accordingly, both the muting state flag and the muting permission flag are set to the off-state. In the subsequent output/indicating lamp control (Fig. 10), the determination "NO" is made in Step D11 to perform the processing of turning off the indicating lamps 15 and 25 (Step D12). The determination "NO" is made in Step D13, and the flow goes to Step D14 to set the output to the off-state.

The determination "NO" is made in Steps C21, C22, and C27 in each piece of initial-state acknowledging processing (Fig. 7) as long as the light obstruction is generated in the detection area of the safety management sensor 100 by the object, and the flow goes to the output/indicating lamp control (Fig. 10) without performing the muting pattern matching processing and the flag setting processing. In the output/indicating lamp control, because Steps D11 to D14 are performed, the off-state of the output and the turn-off states of the indicating lamps 15 and 25 are maintained.

Thus, in the case that the change different from that generated in the muting sensor 200 is generated in the detection-pattern information of the safety management sensor 100, the muting state is not set, but the output is set to the off-state. Therefore, even if the moving object such as a human body enters the danger zone, the safety can be secured.

In the case that some kind of object that enters the detection area of the muting sensor 200 exits from the detection area of the muting sensor 200 without entering the detection area of the safety management sensor 100 while a traveling direction is reversed, the muting pattern information according to motion of the object is accumulated in the muting pattern table. However, the muting state flag is not set to the on-state in this case. Therefore, when the sensors become the all-optical-axis light entrance states again after the object exits from the detection area of the muting sensor 200, in the initial-state acknowledging processing (Fig. 7), the determination "NO" is made in Step C21, the determination "YES" is made in Step C22, the determination "YES" is made in Step C23, and the determination "NO" is made in Step C24. Then the flow goes to Step C26 to initialize the muting pattern table.

Because the light obstruction is generated only in the muting sensor 200, when information that becomes a noise is accumulated in the muting pattern table, the information can rapidly be deleted. Therefore, in the case that the workpiece W or an object other than the workpiece W passes through the detection areas of the sensors 100 and 200, the useless matching with the information unrelated to the current detection-pattern information of the safety management sensor 100 can be prevented in the safety management sensor 100. In the case that the object is reversed after the light obstruction is generated in both the muting sensor 200 and the safety management sensor 100, similarly the muting pattern table is cleared to delete the information that becomes the noise, when the object exits from the detection area of the muting sensor 200. Therefore, in the case that the optical axis in the light obstruction state is detected in the safety management sensor 100, whether the muting state should be set can rapidly and accurately be determined, and the safety can be secured.

According to the embodiment, in the case that a plurality of types of the workpieces W having different shapes and sizes are carried in the danger zone, when the interval between the sensors 100 and 200 is set shorter than the minimum value of the lengths of the workpieces W, the muting state can be set in the above procedure even if any workpiece W is carried in. Therefore, even if the type of the carried-in workpiece W changes, the muting state can easily be set.

In the case that the latest detection-pattern information and the muting pattern information are compared in Step C43 of the flag setting processing of Fig. 9, in addition to the case that the latest detection-pattern information is completely matched with the muting pattern information, desirably whether the latest detection-pattern information is matched with the muting pattern information is determined while a deviation of a boundary position between the optical axes of the light entrance state and the light obstruction state is permitted within a predetermined range. Therefore, the determination processing can stably be performed, even if the optical axis blocked by the workpiece W is deviated by a vibration of the conveyance path, or even if the optical axis in which the light receiving amount reaches the level of the light entrance is deviated by a variation in sensitivity of the light receiving element.

For the predetermined range, a test conveying the multiple workpieces W is previously made to detect the deviation of the light entrance/obstruction pattern between the sensors with respect to the workpieces W, and whereby the permission range can be fixed based on the detection result.

In order to further enhance the safety, desirably the detection-pattern information generated in the muting sensor 200 is registered as reference data while the workpiece W that is permitted to be carried in the danger zone is previously conveyed, and the muting state is not set when the change of the muting pattern information transmitted from the muting sensor 200 is not matched with the reference data during the operation of the system. For example, in the muting pattern accumulating processing, the muting pattern information indicating the light obstruction state is matched with the reference data by an algorithm compliant with Steps C42 to C46 of Fig. 9, and the muting pattern table is cleared when the muting pattern information is not matched with the reference data. Therefore, also the muting pattern information matched with the detection-pattern information on the side of the safety management sensor 100 cannot be extracted in the flag setting processing.

Accordingly, the muting state can be prevented from being set to even the motionless object that is not permitted to be carried in.

The reference data is registered in the muting sensor 200, the matching of the detection-pattern information of the muting sensor 200 with the reference data is performed on the side of the muting sensor 200, the detection-pattern information matched with the reference data may be transmitted as the muting pattern information to the safety management sensor 100. The pieces of reference data of the plurality of types of the workpieces can be registered by any one of the above-described methods.

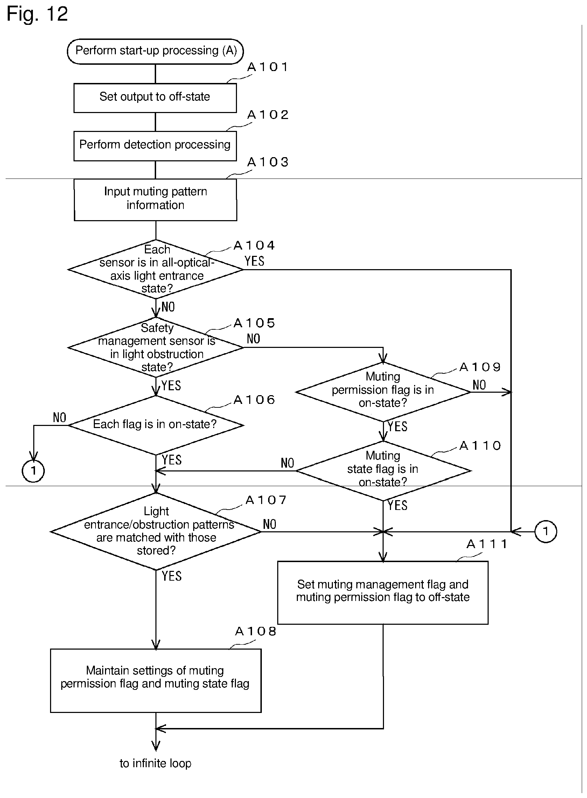

As described above, in the start-up processing in Step A of Fig. 6, it is assumed that the initial values of the output from the output circuit 26 and the flags are set to the off-state. However, actually a procedure illustrated in Fig. 12 is performed in consideration of the case that the sensors 100 and 200 and the conveyance path L are stopped while the workpiece W is included in the detection area of one of the sensors 100 and 200.

In the start-up processing of Fig. 12, the output from the output circuit 26 is set to the off-state according to the power-on (Step A101), and the following pieces of processing are performed while the previous pieces of data of the muting permission flag, the muting state flag, and the muting pattern table are maintained without immediately clearing the previous pieces of data.

The processing of detecting the optical axis of the safety management sensor 100 and the input of the muting pattern information are performed once (Steps A102 and A103). The pieces of processing in Steps A102 and A103 are similar to those of Steps B and C1 of Fig. 6, thereby generating the detection-pattern information indicating the light entrance/obstruction pattern in each of the sensors 100 and 200 immediately after the power-on.

At this point, in both the sensors 100 and 200, in the case that the detection-pattern information indicating the all-optical-axis light entrance state is generated, the determination "YES" is made in Step A104, and the flow goes to Step A111 to set both the muting permission flag and the muting state flag to the off-state.

On the other hand, in the case that the sensors 100 and 200 are started up in one of the states of the stages 2, 3, and 4, the determination "NO" is made in Step A104. When at least one of the optical axes of the safety management sensor is in the light obstruction state 100 ("YES" in Step A105), and when both the muting permission flag and the muting state flag are set to the on-state ("YES" in Step A106), there is a high probability that the previous power cut-off is performed in the muting state. In this case, the detection-pattern information of the safety management sensor 100, which is obtained in Step A102, is matched with the information stored in the work memory. The safety management sensor 100 receives the information in the work memory of the muting sensor 200 and matches the transmitted information with the muting pattern information input in Step S103. When the matching of the transmitted information with the muting pattern information is acknowledged ("YES" in Step A107), the settings of the muting permission flag and the muting state flag are maintained (Step A108).

When at least one of the optical axes of the muting sensor 200 is in the light obstruction state while the safety management sensor 100 is in the all-optical-axis light entrance state ("NO" in Step A105), there is a high probability that the power is cut off in the state of the stage 2. In this case, when the muting permission flag is in the on-state while the muting state flag is in the off-state ("YES" in Step A 109 and "NO" in Step A110), the flow goes to Step A107 to perform the similar matching processing. The light entrance/obstruction pattern of each of the sensors 100 and 200 is matched with the stored information ("YES" in Step A107), the flow goes to Step A 108 to maintain the setting of each flag.

On the other hand, when the light entrance/obstruction pattern is not matched with the setting of the flag ("NO" in Step A106, "NO" in Step A109, or "YES" in Step A110), or when the light entrance/obstruction pattern of each of the sensors 100 and 200 is not matched with the stored information ("NO" in Step A107), the flow goes to Step A111 to set each flag to the off-state.

The reason the procedure of Fig. 12 is performed during the start-up of the sensor will be described below. In restart after the powers of the conveying line and the sensors 100 and 200 are turned off in the states of the stages 2, 3, and 4, when the muting permission flag and the muting state flag are set to the off-state according to the principle, the determination "NO" is made in Steps C21, C22, and C27 of the initial-state acknowledging processing (Fig. 7) in the infinite loop after the restart, and the flow goes to the output/indicating lamp control (Fig. 10). Therefore, the processing of setting the muting permission flag to the on-state (Step C25) cannot be performed. Accordingly, unless the sensors 100 and 200 are put into the all-optical-axis light entrance state, to perform Step C25 while the workpiece W is returned to the state of the stage 1, the muting state is not set with respect to the workpiece W, but the output becomes the off-state.

On the other hand, in the safety management sensor 100 of the embodiment, the detection-pattern information generated through the detection processing in Step B, the muting pattern information obtained in Step C1, and the flags are stored in the nonvolatile memory of the processing circuit 20, so that the pieces of data are retained even if the powers are turned off. According to the procedure of Fig. 12, even if the powers of the conveying line and the sensors are turned off in the states of the stages 2, 3, and 4, immediately after the restart, the muting permission flag and the muting state flag can be restored to the settings before the cut-off of the power. Therefore, even if the workpiece W is not returned after the restart, the muting state can be set to enhance user-friendliness and work efficiency.

In the case that the detection-pattern information generated through the detection processing is transmitted as the muting pattern information to the safety management sensor 100 every time the detection processing of one cycle is performed on the side of the muting sensor 200, desirably the timing of the detection processing of the muting sensor 200 is matched with the timing of the detection processing of the safety management sensor 100 by the communication between the sensors 100 and 200. However, it is not always necessary to match the timing of the detection processing of the muting sensor 200 with the timing of the detection processing of the safety management sensor 100. For example, the safety management sensor 100 makes a transmission request to the muting sensor 200 at the time when Step C1 is performed on the side of the safety management sensor 100, and the latest detection-pattern information at that time in the muting sensor 200 may be transmitted as the muting pattern information.

Instead of the method for accumulating the muting pattern information on the side of the safety management sensor 100, the muting sensor 200 accumulates the detection-pattern information of the muting sensor 200, the safety management sensor 100 makes the transmission request to the muting sensor 200 when the optical axis in the light obstruction state is generated in the safety management sensor 100, and the muting sensor 200 may transmit the muting pattern information in response to the transmission request. In this case, for example, the oldest information in the stored pieces of information is transmitted from the muting sensor 200 according to the algorithm of Fig. 9, the safety management sensor 100 matches the transmitted information with the detection-pattern information of the safety management sensor 100, and the muting state flag may be set to the on-state when the transmitted information is matched with the detection-pattern information of the safety management sensor 100. When the transmitted information is not matched with the detection-pattern information of the safety management sensor 100, the safety management sensor 100 issues a command to delete the information to the muting sensor 200, and the muting sensor 200 may perform the deletion processing in response to the command.

Other embodiments in the safety management system will be described below.

The projectors and the optical receivers of the sensors 100 and 200 are provided generally upright. Alternatively, the projectors and the optical receivers may slightly obliquely be disposed depending on a situation of an installation space.

In the embodiment, the sensors 100 and 200 are identical to each other in the number of optical axes (15 optical axes). In the case that the workpiece W of the detection target has the simple shape, the number of optical axes of the muting sensor 200 may be lower than that of the safety management sensor 100. In this case, when a table indication a correspondence relationship of the optical axes between the sensors 100 and 200 is registered in the safety management sensor 100, there is no particular trouble in acknowledging the matching between the detection-pattern information and the muting pattern information in the safety management sensor 100.

According to the procedures of Figs. 9 and 10, the muting state can be set at the same time as the safety management sensor 100 becomes the light obstruction state. Alternatively, the muting state flag and the output are set to the off-state immediately after the safety management sensor 100 becomes the light obstruction state, and the muting state may be set when the muting pattern information matched with each of the pieces of detection-pattern information of a plurality of cycles can be extracted.

In the embodiment, the muting pattern table is cleared when the sensors 100 and 200 become the all-optical-axis light entrance states. In order to apply the processing, it is necessary that the interval between the safety management sensor 100 and the muting sensor 200 be shorter than the assumed length of the workpiece W. In the case that the interval between the sensors 100 and 200 is fixed while the length of the workpiece W is not taken into account, desirably the accumulated information in the muting pattern table is retained in a considerable period. In this case, the delay of the processing can be avoided by performing the matching of the detection-pattern information of the safety management sensor 100 with the muting pattern information that is accumulated after the time in which the time the safety management sensor 100 becomes the light obstruction state is traced back a predetermined period. At this point the tracing-back period can be fixed based on a speed of the conveyance path L or a distance between the sensors 100 and 200.

In the system of the embodiment, each of the safety management sensor 100 and the muting sensor 200 includes the processing circuits 10 and 20 of the computers. Alternatively, the processing circuits 10 and 20 of the safety management sensor 100 may control the muting sensor 200. Alternatively, a computer that controls the sensors 100 and 200 may be provided out of the sensors 100 and 200.

In the system of the embodiment, the one safety management sensor 100 and the one muting sensor 200 are provided. Alternatively, the plurality of safety management sensors 100 may be provided while the one muting sensor 200 is provided in the upstream position of the safety management sensors 100. In this case, the muting sensor 200 transmits the muting pattern information to each of the safety management sensors 100, and the muting state may be set in each safety management sensor by determining whether the muting pattern information is matched with the detection-pattern information of the safety management sensor 100. In the case that the plurality of conveyance paths for workpiece W are provided in one danger zone, the safety management sensor 100 and the muting sensor 200 are provided in each conveyance path, and the electric power supplied to the machine is controlled by a logical addition of the output signals from the safety management sensors 100.

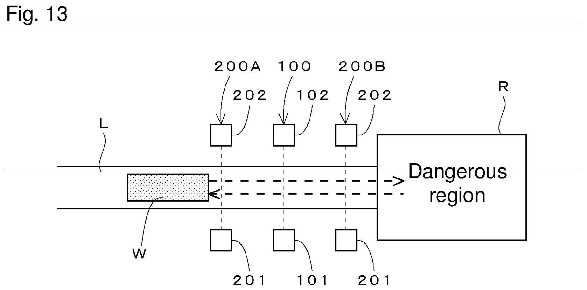

As illustrated in Fig. 13, in the conveyance path L to a danger zone R, muting sensors 200A and 200B are provided on both sides of the safety management sensor 100, which allows the workpiece W to be carried in and out from the danger zone R. In the present embodiment, the sensors 100, 200A, and 200B are disposed at intervals shorter than the length of the workpiece W.

In the embodiment of Fig. 13, although the pieces of muting pattern information are input to the safety management sensor 100 from both the muting sensors 200A and 200B, the first input from the muting sensor indicating the light obstruction state is validated while the other input from the muting sensor is invalidated, the validated input is set to the target accumulated in the muting pattern table, and the pieces of processing according to Figs. 7 to 10 are performed. When the detection-pattern information in the safety management sensor 100 is matched with the muting pattern information from the validated muting sensor, the output from the safety management sensor 100 and the muting state flag become the on-states. In the present embodiment, although the light obstruction state is also generated in the invalidated muting sensor subsequent to the validated muting sensor and the safety management sensor 100, the muting pattern information indicating the light obstruction state is not accumulated in the muting pattern table, but the invalidated state of the input from the invalidated muting sensor is maintained until the invalidated muting sensor returns from the light obstruction state to the all-optical-axis light entrance state.

According to the procedures of Figs. 7 to 10, the muting pattern table is cleared when both the validated muting sensor and the safety management sensor 100 return from the light obstruction state to the all-optical-axis light entrance state. Accordingly, after the invalidated muting sensor is released, the muting pattern information from the muting sensor that next becomes the light obstruction state is validated and accumulated in the muting pattern table, whereby contents of the muting pattern table correspond to the latest motion of the workpiece W.

For example, it is assumed that the workpiece W is carried out from the danger zone R after carried in the danger zone R and processed. In carrying in the workpiece W, the muting sensor 200A, the safety management sensor 100, and the muting sensor 200B become the light obstruction states in this order. In the safety management sensor 100, the muting pattern information from the muting sensor 200A that becomes the first light obstruction state is accumulated, and the matching of the muting pattern information with the detection-pattern information of the safety management sensor 100 is performed to discriminate the workpiece W. The muting pattern table is cleared when the workpiece W exits from detection areas of the sensors 200A and 100, and the invalidated state of the input from the sensor 200B is released when the workpiece W passes through the detection area of the sensor 200B.

When the object is carried out from the danger zone R, because the muting sensor 200B, the safety management sensor 100, and the muting sensor 200A become the light obstruction states in this order, the safety management sensor 100 accumulates the muting pattern information from the muting sensor 200B that becomes the first light obstruction state, and the safety management sensor 100 discriminates the workpiece W by performing the matching of the muting pattern information with the detection-pattern information of the safety management sensor 100. The muting pattern table is cleared when the workpiece W exits from detection areas of the sensors 200B and 100, and the invalidated state of the input from the sensor 200A is released when the workpiece W passes through the detection area of the sensor 200A.

Thus, every time the workpiece W moves in the direction in which the workpiece W comes close to or move away from the danger zone R, the muting pattern information from the muting sensor that detects the first movement is accumulated and the matching of the muting pattern information with the detection-pattern information in the safety management sensor 100 is performed. Therefore, the muting state can be set when determining that the muting pattern information is matched with the detection-pattern information in the safety management sensor 100.

In the present embodiment, it is not always necessary that the muting pattern information be output from each of the muting sensors 200A and 200B to the safety management sensor 100, but the output of the muting pattern information may be started when determining that the muting sensors 200A and 200B change from the all-optical-axis light entrance state to the light obstruction state.

In the embodiment of Fig. 13, in the case that the sensors 100, 200A, and 200B are disposed at intervals longer than the length of the workpiece W, the accumulated information in the muting pattern table is not deleted but retained, and the muting pattern table may be cleared when the all the sensors including the invalidated muting sensor become the all-optical-axis light entrance states from the light obstruction states.

### DESCRIPTION OF SYMBOLS

- 100: Safety management sensor
- 200: Muting sensor
- 101,201: Projector
- 102,202: Optical receiver
- 10,20: Processing circuit
- 11: Light emitting element (LED)
- 21: Light receiving element (photodiode)
- 14,24: Communication circuit
- 26: Output circuit

## Claims

1. A safety management system comprising:
at least two multiple-optical-axis photoelectric sensors (100, 200) arranged along a conveyance path for an object conveyed by a conveyor machine toward a danger zone, each of the multiple-optical-axis photoelectric sensors (100, 200) including a projector (101, 201) and an optical receiver (102, 202) that are provided upright while facing each other across the conveyance path, each of the multiple-optical axis photoelectric sensors comprising several optical axes, an optical axis being either in a light entrance state or in a light obstruction state,
one of the two multiple-optical-axis photoelectric sensors (100, 200) located on a downstream side in a conveyance direction of the object acting as a safety management sensor (100), the safety management sensor (100) being arranged to output a signal that is set to an on-state or an off-state, wherein the output signal of the safety management sensor (100) is set to an on-state when all optical axes of the safety management sensor (100) are in a light entrance state, and wherein the safety management sensor (100) is configured to stop conveyance by the conveyor machine when the output signal of the safety management sensor is set to an off-state, the other multiple-optical-axis photoelectric sensor (200) acting as a muting sensor (200, 200A, 200B) with respect to the safety management sensor (100),
the safety management system further comprising:
detection-pattern accumulation means for accumulating detection-pattern information representing a light entrance/obstruction pattern of the optical axes of the muting sensor (200, 200A, 200B) while at least one of the optical axes of the muting sensor (200, 200A, 200B) is in the light obstruction state; and
control means (10, 20) for determining whether a change in the light entrance/obstruction pattern of the optical axes of the safety management sensor (100) matches with a change indicated by the detection-pattern information accumulated by the detection-pattern accumulation means while at least one of the optical axes of the safety management sensor (100) is in the light obstruction state, for setting an output from the safety management sensor (100) to the on-state when determining that the changes match with each other, and for setting the output from the safety management sensor (100) to the off-state when determining that the changes do not match with each other, the safety management system being **characterized in that**
every time the light entrance/obstruction pattern of the optical axes of the muting sensor (200, 200A, 200B) changes, the detection-pattern accumulation means is configured to store detection-pattern information representing the post-change pattern of the light entrance/obstruction pattern of the optical axes of the muting sensor (200, 200A, 200B) while at least one of the optical axes of the muting sensor (200, 200A, 200B) is in the light obstruction state,
while at least one of the optical axes of the safety management sensor (100) is in the light obstruction state, the control means (10, 20) is configured to perform a process of comparing the latest light entrance/obstruction pattern of the optical axes of the safety management sensor (100) with the detection-pattern information accumulated in the detection-pattern accumulation means in a chronological order of accumulation of the detection-pattern information to match a pattern in the detection-pattern information with the latest light entrance/obstruction pattern of the optical axes of the safety management sensor (100), the control means (10, 20) is configured to delete the pattern in the detection-pattern information that does not match with the latest light entrance/obstruction pattern of the optical axes of the safety management sensor (100), the control means (10, 20) is configured to set the output from the safety management sensor (100) to the on-state when a pattern in the detection-pattern information matches with the latest light entrance/obstruction pattern of the optical axes of the safety management sensor (100), and the control means (10, 20) is configured to set the output from the safety management sensor (100) to the off-state when none of the patterns in the detection-pattern information accumulated in the detection-pattern accumulation means matches with the latest light entrance/obstruction pattern of the optical axes of the safety management sensor (100).

2. The safety management system according to claim 1, further comprising reset means for detecting a transfer from a state in which at least one of the optical axes of at least the muting sensor (200, 200A, 200B) is in the light obstruction state to the state in which all the optical axes of each sensor (200, 200A, 200B) are in the light entrance state based on the latest light entrance/obstruction patterns of the optical axes of the safety management sensor (100) and the muting sensor (200, 200A, 200B), and for clearing the information accumulated in the detection-pattern accumulation means in response to this detection.

3. The safety management system according to claim 1, wherein
the control means (10, 20) is configured to perform the process of comparing the latest light entrance/obstruction pattern of the optical axes of the safety management sensor (100) with the detection-pattern information that is accumulated from a time point that is a predetermined period of time prior to a current time point in the detection-pattern information accumulated by the detection-pattern accumulation means, and the controls means (10, 20) is configured to extract any pattern in the accumulated detection-pattern information that matches with the latest light entrance/obstruction pattern of the optical axes of the safety management sensor (100).

4. The safety management system according to claim 3, wherein the control means (10, 20) performs the comparison process while a predetermined permissible error is provided between the latest light entrance/obstruction pattern of the optical axes of the safety management sensor (100) and the detection-pattern information accumulated in the detection-pattern accumulation means with respect to a boundary position of the optical axes in the light obstruction state and the optical axes in the light entrance state.

5. The safety management system according to claim 1, further comprising
registration means for registering, as reference data, a set of detection-pattern information that represents a change in the light entrance/obstruction pattern generated in the optical axes of the muting sensor (200, 200A, 200B) while the object that is permitted to be conveyed to the danger zone passes through a detection area of the muting sensor (200, 200A, 200B), wherein
the control means (10, 20) includes means for comparing the detection-pattern information of the muting sensor (200, 200A, 200B) with the reference data while at least one of the optical axes of the muting sensor (200, 200A, 200B) is in the light obstruction state, and the control means (10, 20) sets the output from the safety management sensor (100) to the off-state when the control means (10, 20) determines due to this comparison that the detection-pattern information does not match with the reference data.

6. The safety management system according to claim 1, wherein
the detection-pattern accumulation means and the control means (10, 20) are provided in the safety management sensor (100), the safety management system comprises communication means (14, 24) for conducting communication between the safety management sensor (100) and the muting sensor (200, 200A, 200B) and the communication means (14, 24) is provided in each of the safety management sensor (100) and the muting sensor (200, 200A, 200B),
the muting sensor (200, 200A, 200B) is configured to transmit the detection-pattern information indicating the light entrance/obstruction pattern of the optical axes of the muting sensor (200, 200A, 200B) to the safety management sensor (100) through the communication means (14, 24), and the detection-pattern accumulation means of the safety management sensor (100) is configured to accumulate the detection-pattern information transmitted from the muting sensor (200, 200A, 200B).

7. The safety management system according to claim 6, wherein
each of the safety management sensor (100) and the muting sensor (200, 200A, 200B) includes a nonvolatile memory in which the detection-pattern information representing the latest light entrance/obstruction pattern of the optical axes of each of the safety management sensor (100) and the muting sensor (200, 200A, 200B) is stored, a muting state flag indicating that output is set to the on-state while at least one of the optical axes of the safety management sensor (100) is in the light obstruction state being stored in the nonvolatile memory of the safety management sensor (100),
when the muting state flag is set to the on-state at the time point at which the safety management sensor (100) is powered on, the control means (10, 20) is configured to maintain the setting of the muting state flag to set the output of the safety management sensor (100) to the on-state on a condition that at least one of the optical axes of the safety management sensor (100) is in the light obstruction state and that the first light entrance/obstruction pattern in each sensor (100) after the power-on matches with the detection-pattern information stored in the respective nonvolatile memory, and the control means (10, 20) is configured to reset the muting state flag to set the output of the safety management sensor (100) to the off-state when that condition is not met.

8. The safety management system according to claim 6, wherein
a plurality of multiple-optical-axis photoelectric sensors (100, 200) each of which includes the detection-pattern accumulation means, the control means (10, 20), and the communication means (14, 24) are disposed as the safety management sensors (100) along the conveyance path for the object, and one multiple-optical-axis photoelectric sensor (200) including the communication means is disposed as the muting sensor (200, 200A, 200B) on an upstream side of the safety management sensors (100) in the conveying direction of the object.

9. The safety management system according to claim 6, wherein
one safety management sensor (100) including the detection-pattern accumulation means, the control means (10, 20), and the communication means (14, 24) and two muting sensors (200, 200A, 200B) each of which includes the communication means (14, 24) are disposed along the conveyance path for the object conveyed toward the danger zone, the safety management sensor (100) being located between the muting sensors (200, 200A, 200B), and
the detection-pattern accumulation means accumulates the first detection-pattern information transmitted from one of the two muting sensors (200, 200A, 200B), the detection-pattern information indicating that the optical axis in the light obstruction state exists.

10. A multiple-optical-axis photoelectric sensor (100) for use as the safety management sensor (100) of the safety management system as claimed in claim 1, in which a plurality of optical axes are provided between a projector (101, 201) and an optical receiver (102, 202) that are provided opposite to each other, the multiple-optical-axis photoelectric sensor (100) being configured to output a signal that is set to an on-state or an off-state,
the multiple-optical-axis photoelectric sensor (100) comprising:
information input means into which detection-pattern information can be input by conducting communication with another multiple-optical-axis photoelectric sensor (200) disposed as a muting sensor (200, 200A, 200B), the detection-pattern information representing a light entrance/obstruction pattern of the optical axes of the muting sensor (200, 200A, 200B); and
control means (10, 20) for determining whether a change in the light entrance/obstruction pattern of the optical axes of the sensor (100) matches with a change in the light entrance/obstruction pattern indicated by the detection-pattern information input into the information input means while at least one of the optical axes of the sensor (100) is in the light obstruction state, for setting the output signal to the on-state when the changes match each other, and for setting the output signal to the off-state when the changes do not match each other,
the multiple-optical-axis photoelectric sensor (100) being **characterized in that** it further comprises:
detection-pattern accumulation means for storing post-change detection-pattern information every time the detection-pattern information that is input through communication with the muting sensor (200, 200A, 200B) by the information input means changes, wherein
while at least one of the optical axes of the safety management sensor (100) is in the light obstruction state, the control means (10, 20) is configured to perform a process of comparing the latest light entrance/obstruction pattern of the optical axes of the safety management sensor (100) with the detection-pattern information accumulated in the detection-pattern accumulation means in a chronological order of accumulation of the detection-pattern information to match a pattern in the detection-pattern information with the latest light entrance/obstruction pattern of the optical axes of the safety management sensor (100), the control means (10, 20) is configured to delete the pattern in the detection-pattern information that does not match with the latest light entrance/obstruction pattern of the optical axes of the safety management sensor (100), the control means (10, 20) is configured to set the output signal from the safety management sensor (100) to the on-state when the pattern in the detection-pattern information matches with the latest light entrance/obstruction pattern of the optical axes of the safety management sensor (100), and the control means (10, 20) is configured to set the output signal from the safety management sensor (100) to the off-state when none of the patterns in the detection-pattern accumulation means matches with the latest light entrance/obstruction pattern of the optical axes of the safety management sensor (100).

11. The multiple-optical-axis photoelectric sensor (100) according to claim 10, further comprising
reset means for detecting a transfer from a state in which at least one of the optical axes of at least the muting sensor (200, 200A, 200B) is in the light obstruction state to the state in which all the optical axes of each sensor (200, 200A, 200B) are in the light entrance state based on the light entrance/obstruction patterns of the optical axes of the safety management sensor (100) and the muting sensor (200, 200A, 200B), and for resetting the information accumulated in the detection-pattern accumulation means in response to this detection.

## Patentansprüche

1. Sicherheitsmanagementsystem, aufweisend:
mindestens zwei mehrere optische Achsen aufweisende photoelektrische Sensoren (100, 200), die entlang eines Förderwegs für ein Objekt angeordnet sind, das von einer Fördermaschine in Richtung einer Gefahrenzone befördert wird, wobei jeder der mehrere optische Achsen aufweisenden photoelektrischen Sensoren (100, 200) einen Projektor (101, 201) und einen optischen Empfänger (102, 202) aufweist, die aufrecht bereitgestellt sind und einander mit dem Förderweg dazwischen gegenüberliegen, wobei jeder der mehrere optische Achsen aufweisenden photoelektrischen Sensoren mehrere optische Achsen aufweist, wobei eine optische Achse entweder in einem Licht-fällt-ein-Zustand oder in einem Licht-versperrt-Zustand ist,
wobei einer der zwei mehrere optische Achsen aufweisenden photoelektrischen Sensoren (100, 200) in Bezug auf eine Förderrichtung des Objekts förderabwärts angeordnet ist und als ein Sicherheitsmanagementsensor (100) agiert, wobei der Sicherheitsmanagementsensor (100) dazu angeordnet ist, ein Signal auszugeben, das auf einen Ein-Zustand oder einen Aus-Zustand gesetzt ist, wobei das Ausgangssignal des Sicherheitsmanagementsensors (100) auf einen Ein-Zustand gesetzt ist, wenn alle optischen Achsen des Sicherheitsmanagementsensors (100) in einem Licht-fällt-ein-Zustand sind, und wobei der Sicherheitsmanagementsensor (100) dazu eingerichtet ist, das Fördern der Fördermaschine zu stoppen, wenn das Ausgangssignal des Sicherheitsmanagementsensors auf einen Aus-Zustand gesetzt ist, wobei der andere mehrere optische Achsen aufweisende photoelektrische Sensor (200) als ein Sperrsensor (200, 200A, 200B) in Bezug auf den Sicherheitsmanagementsensor (100) agiert,
wobei das Sicherheitsmanagementsystem ferner aufweist:
eine Erfassungsmuster-Akkumulationsmittel zum Akkumulieren von Erfassungsmusterinformationen, die ein Licht-fällt-ein-/Licht-versperrt-Muster der optischen Achsen des Sperrsensors (200, 200A, 200B) repräsentieren, während sich mindestens eine der optischen Achsen des Sperrsensors (200, 200A, 200B) in dem Licht-versperrt-Zustand befindet; und
ein Steuermittel (10, 20) zum Bestimmen, ob eine Änderung des Licht-fällt-ein-/Licht-versperrt-Musters der optischen Achsen des Sicherheitsmanagementsensors (100) mit einer Änderung übereinstimmt, die durch die Erfassungsmusterinformationen angegeben wird, die durch das Erfassungsmuster-Akkumulationsmittel akkumuliert werden, während mindestens eine der optischen Achsen des Sicherheitsmanagementsensors (100) in dem Licht-versperrt-Zustand ist, zum Setzen eines Ausgangs des Sicherheitsmanagementsensors (100) in den Ein-Zustand, wenn bestimmt wird, dass die Änderungen miteinander übereinstimmen, und zum Setzen des Ausgangs des Sicherheitsmanagementsensors (100) in den Aus-Zustand, wenn bestimmt wird, dass die Änderungen nicht miteinander übereinstimmen,
wobei das Sicherheitsmanagementsystem
**dadurch gekennzeichnet ist, dass**
jedes Mal, wenn sich das Licht-fällt-ein-/Licht-versperrt-Muster der optischen Achsen des Sperrsensors (200, 200A, 200B) ändert, das Erfassungsmuster-Akkumulationsmittel dazu eingerichtet ist, Erfassungsmusterinformationen zu speichern, die das Licht-versperrt-Muster der optischen Achsen des Sperrsensors (200, 200A, 200B) nach der Änderung repräsentieren, während sich mindestens eine der optischen Achsen des Sperrsensors (200, 200A, 200B) in dem Licht-versperrt-Zustand befindet,
während mindestens eine der optischen Achsen des Sicherheitsmanagementsensors (100) in dem Licht-versperrt-Zustand ist, das Steuermittel (10, 20) dazu eingerichtet ist, einen Prozess eines Vergleichens des letzten Licht-fällt-ein-/Licht-versperrt-Musters der optischen Achsen des Sicherheitsmanagementsensors (100) mit den Erfassungsmusterinformationen, die in dem Erfassungsmuster-Akkumulationsmittel akkumuliert sind, in einer chronologischen Reihenfolge des Akkumulierens der Erfassungsmusterinformationen durchzuführen, um ein Muster in den Erfassungsmusterinformationen mit dem letzten Licht-fällt-ein-/Licht-versperrt-Muster der optischen Achsen des Sicherheitsmanagementsensors (100) abzugleichen, das Steuermittel (10, 20) dazu eingerichtet ist, das Muster in den Erfassungsmusterinformationen, das nicht mit dem letzten Licht-fällt-ein-/Licht-versperrt-Muster der optischen Achsen des Sicherheitsmanagementsensors (100) übereinstimmt, zu löschen, das Steuermittel (10, 20) dazu eingerichtet ist, den Ausgang des Sicherheitsmanagementsensors (100) in den Ein-Zustand einzustellen, wenn ein Muster in den Erfassungsmusterinformationen mit dem letzten Licht-fällt-ein-/Licht-versperrt-Muster der optischen Achsen des Sicherheitsmanagementsensors (100) übereinstimmt, und das Steuermittel (10, 20) dazu eingerichtet ist, den Ausgang des Sicherheitsmanagementsensors (100) in den Aus-Zustand einzustellen, wenn keines der Muster in den Erfassungsmusterinformationen, die in dem Erfassungsmuster-Akkumulationsmittel akkumuliert sind, mit dem letzten Licht-fällt-ein-/Licht-versperrt-Muster der optischen Achsen des Sicherheitsmanagementsensors (100) übereinstimmt.

2. Sicherheitsmanagementsystem nach Anspruch 1, ferner aufweisend ein Rücksetzmittel zum Erfassen eines Übergangs von einem Zustand, in dem sich mindestens eine der optischen Achsen mindestens des Sperrsensors (200, 200A, 200B) in dem Licht-versperrt-Zustand befindet, in den Zustand, in dem sich alle optischen Achsen jedes Sensors (200, 200A, 200B) in dem Licht-fällt-ein-Zustand befinden, basierend auf den letzten Licht-fällt-ein-/Licht-versperrt-Mustern der optischen Achsen des Sicherheitsmanagementsensors (100) und des Sperrsensors (200, 200A, 200B), und zum Löschen der im Erfassungsmuster-Akkumulationsmittel akkumulierten Informationen als Reaktion auf diese Erfassung.

3. Sicherheitsmanagementsystem nach Anspruch 1, wobei das Steuermittel (10, 20) dazu eingerichtet ist, den Prozess des Vergleichens des letzten Licht-fällt-ein-/Licht-versperrt-Musters der optischen Achsen des Sicherheitsmanagementsensors (100) mit denjenigen unter den durch das Erfassungsmuster-Akkumulationsmittel akkumulierten Erfassungsmusterinformationen durchzuführen die von einem Zeitpunkt an akkumuliert sind, der eine vorbestimmte Zeitdauer vor einem aktuellen Zeitpunkt ist, und das Steuermittel (10, 20) dazu eingerichtet ist, ein beliebiges Muster in den akkumulierten Erfassungsmusterinformationen zu extrahieren, das mit dem letzten Licht-fällt-ein-/Licht-versperrt-Muster der optischen Achsen des Sicherheitsmanagementsensors (100) übereinstimmt.

4. Sicherheitsmanagementsystem nach Anspruch 3, wobei das Steuermittel (10, 20) den Vergleichsprozess durchführt, während ein vorbestimmter zulässiger Fehler zwischen dem letzten Licht-fällt-ein-/Licht-versperrt-Muster der optischen Achsen des Sicherheitsmanagementsensors (100) und den in dem Erfassungsmuster-Akkumulationsmittel akkumulierten Erfassungsmusterinformationen in Bezug auf eine Grenzposition der optischen Achsen im Licht-versperrt-Zustand und der optischen Achsen im Licht-fällt-ein-Zustand vorgesehen ist.

5. Sicherheitsmanagementsystem nach Anspruch 1, ferner aufweisend
ein Registrierungsmittel zum Registrieren, als Referenzdaten, eines Satzes von Erfassungsmusterinformationen, die eine Änderung im Licht-fällt-ein-/Licht-versperrt-Muster repräsentieren, das in den optischen Achsen des Sperrsensors (200, 200A, 200B) erzeugt wird, während das Objekt, das der Gefahrenzone zugeführt werden darf, einen Erfassungsbereich des Sperrsensors (200, 200A, 200B) durchläuft, wobei
das Steuermittel (10, 20) ein Mittel zum Vergleichen der Erfassungsmusterinformationen des Sperrsensors (200, 200A, 200B) mit den Referenzdaten enthält, während sich mindestens eine der optischen Achsen des Sperrsensors (200, 200A, 200B) in dem Licht-versperrt-Zustand befindet, und das Steuermittel (10, 20) den Ausgang des Sicherheitsmanagementsensors (100) in den Aus-Zustand versetzt, wenn das Steuermittel (10, 20) aufgrund dieses Vergleichs bestimmt, dass die Erfassungsmusterinformationen nicht mit den Referenzdaten übereinstimmen.

6. Sicherheitsmanagementsystem nach Anspruch 1, wobei
das Erfassungsmuster-Akkumulationsmittel und das Steuermittel (10, 20) in dem Sicherheitsmanagementsensor (100) vorgesehen sind, das Sicherheitsmanagementsystem Kommunikationsmittel (14, 24) zum Durchführen von Kommunikation zwischen dem Sicherheitsmanagementsensor (100) und dem Sperrsensor (200, 200A, 200B) aufweist und das Kommunikationsmittel (14, 24) sowohl in dem Sicherheitsmanagementsensor (100) als auch in dem Sperrsensor (200, 200A, 200B) bereitgestellt sind,
der Sperrsensor (200, 200A, 200B) dazu eingerichtet ist, die Erfassungsmusterinformationen, die das Licht-fällt-ein-/Licht-versperrt-Muster der optischen Achsen des Sperrsensors (200, 200A, 200B) angeben, durch das Kommunikationsmittel (14, 24) an den Sicherheitsmanagementsensor (100) zu übertragen, und das Erfassungsmuster-Akkumulationsmittel des Sicherheitsmanagementsensors (100) dazu eingerichtet ist, die von dem Sperrsensor (200, 200A, 200B) übertragenen Erfassungsmusterinformationen zu akkumulieren.

7. Sicherheitsmanagementsystem nach Anspruch 6, wobei sowohl der Sicherheitsmanagementsensor (100) als auch der Sperrsensor (200, 200A, 200B) einen nichtflüchtigen Speicher aufweisen, in dem die Erfassungsmusterinformationen gespeichert sind, die das letzte Licht-fällt-ein-/Licht-versperrt-Muster der optischen Achsen sowohl des Sicherheitsmanagementsensors (100) als auch des Sperrsensors (200, 200A, 200B) repräsentieren, wobei ein Sperrzustand-Flag, das angibt, dass ein Ausgang in den Ein-Zustand gesetzt ist, während sich mindestens eine der optischen Achsen des Sicherheitsmanagementsensors (100) in dem Licht-versperrt-Zustand befindet, in dem nichtflüchtigen Speicher des Sicherheitsmanagementsensors (100) gespeichert ist,
wenn das Sperrzustand-Flag zu dem Zeitpunkt, zu dem der Sicherheitsmanagementsensor (100) eingeschaltet ist, in den Ein-Zustand gesetzt ist, das Steuermittel (10, 20) dazu eingerichtet ist, das Setzen des Sperrzustand-Flags beizubehalten, um den Ausgang des Sicherheitsmanagementsensors (100) in den Ein-Zustand zu setzen, unter der Bedingung, dass sich mindestens eine der optischen Achsen des Sicherheitsmanagementsensors (100) in dem Licht-versperrt-Zustand befindet, und dass das erste Licht-fällt-ein-/Licht-versperrt-Muster in jedem Sensor (100) nach dem Einschalten mit den im jeweiligen nichtflüchtigen Speicher gespeicherten Erfassungsmusterinformationen übereinstimmt, und das Steuermittel (10, 20) dazu eingerichtet ist, das Sperrzustand-Flag zurückzusetzen, um den Ausgang des Sicherheitsmanagementsensors (100) in den Aus-Zustand zu setzen, wenn diese Bedingung nicht erfüllt ist.

8. Sicherheitsmanagementsystem nach Anspruch 6, wobei
eine Vielzahl von mehrere optische Achsen aufweisenden photoelektrischen Sensoren (100, 200), von denen jeder das Erfassungsmuster-Akkumulationsmittel, das Steuermittel (10, 20) und das Kommunikationsmittel (14, 24) aufweist, als der Sicherheitsmanagementsensor (100) entlang des Förderwegs für das Objekt angeordnet sind, und ein mehrere optische Achsen aufweisender photoelektrischer Sensor (200), der das Kommunikationsmittel aufweist, als der Sperrsensor (200, 200A, 200B) in Bezug auf die Förderrichtung des Objekts förderaufwärts des Sicherheitsmanagementsensors (100) angeordnet ist.

9. Sicherheitsmanagementsystem nach Anspruch 6, wobei
ein Sicherheitsmanagementsensor (100), der das Erfassungsmuster-Akkumulationsmittel, das Steuermittel (10, 20) und das Kommunikationsmittel (14, 24) aufweist, und zwei Sperrsensoren (200, 200A, 200B), von denen jeder das Kommunikationsmittel (14, 24) aufweist, entlang des Förderwegs für das Objekt angeordnet sind, das zur Gefahrenzone hin befördert wird, wobei der Sicherheitsmanagementsensor (100) zwischen den Sperrsensoren (200, 200A, 200B) angeordnet ist, und
das Erfassungsmuster-Akkumulationsmittel die ersten Erfassungsmusterinformationen akkumuliert, die von einem der zwei Sperrsensoren (200, 200A, 200B) übertragen werden, wobei die Erfassungsmusterinformationen angeben, dass die optische Achse im Licht-versperrt-Zustand existiert.

10. Mehrere optische Achse aufweisender photoelektrischer Sensor (100) zur Verwendung als der Sicherheitsmanagementsensor (100) des Sicherheitsmanagementsystems nach Anspruch 1, wobei mehrere optische Achsen zwischen einem Projektor (101, 201) und einem optischen Empfänger (102, 202) bereitgestellt sind, die einander gegenüberliegend bereitgestellt sind, wobei der mehrere optische Achsen aufweisende photoelektrische Sensor (100) dazu eingerichtet ist, ein Signal auszugeben, das auf einen Ein-Zustand oder einen Aus-Zustand gesetzt ist,
wobei der mehrere optische Achsen aufweisende photoelektrische Sensor (100) aufweist:
ein Informationseingabemittel, in das Erfassungsmusterinformationen eingebbar sind, indem eine Kommunikation mit einem anderen mehrere optische Achsen aufweisenden photoelektrischen Sensor (200), der als ein Sperrsensor (200, 200A, 200B) angeordnet ist, durchgeführt wird, wobei die Erfassungsmusterinformationen ein Licht-fällt-ein-/Licht-versperrt-Muster der optischen Achsen des Sensors (200, 200A, 200B) repräsentieren; und
ein Steuermittel (10, 20) zum Bestimmen, ob eine Änderung des Licht-fällt-ein-/Licht-versperrt-Musters der optischen Achsen des Sensors (100) mit einer Änderung des Licht-fällt-ein-/Licht-versperrt-Musters übereinstimmt, das durch die Erfassungsmusterinformationen angegeben wird, die in das Informationseingabemittel eingegeben worden sind, während mindestens eine der optischen Achsen des Sensors (100) in dem Licht-versperrt-Zustand ist, zum Setzen des Ausgangssignals in den Ein-Zustand, wenn die Änderungen miteinander übereinstimmen, und zum Setzen des Ausgangssignals in den Aus-Zustand, wenn die Änderungen nicht miteinander übereinstimmen,
wobei der mehrere optische Achsen aufweisende photoelektrische Sensor (100) **dadurch gekennzeichnet ist, dass** er ferner aufweist:
ein Erfassungsmuster-Akkumulationsmittel zum Speichern von Erfassungsmusterinformationen nach einer Änderung jedes Mal, wenn sich die Erfassungsmusterinformationen ändern, die durch Kommunikation mit dem Sperrsensor (200, 200A, 200B) durch das Informationseingabemittel eingegeben werden, wobei
während sich mindestens eine der optischen Achsen des Sicherheitsmanagementsensors (100) in dem Licht-versperrt-Zustand befindet, das Steuermittel (10, 20) dazu eingerichtet ist, einen Prozess des Vergleichens des letzten Licht-fällt-ein-/Licht-versperrt-Musters der optischen Achsen des Sicherheitsmanagementsensors (100) mit den in dem Erfassungsmuster-Akkumulationsmittel akkumulierten Erfassungsmusterinformationen in einer chronologischen Reihenfolge der Akkumulation der Erfassungsmusterinformationen durchzuführen, um ein Muster in den Erfassungsmusterinformationen mit dem letzten Licht-fällt-ein-/Licht-versperrt-Muster der optischen Achsen des Sicherheitsmanagementsensors (100) abzugleichen, das Steuermittel (10, 20) dazu eingerichtet ist, das Muster in den Erfassungsmusterinformationen, das nicht mit dem letzten Licht-fällt-ein-/Licht-versperrt-Muster der optischen Achsen des Sicherheitsmanagementsensors (100) übereinstimmt, zu löschen, das Steuermittel (10, 20) dazu eingerichtet ist, das Ausgangssignal von dem Sicherheitsmanagementsensor (100) auf den Ein-Zustand zu setzen, wenn das Muster in den Erfassungsmusterinformationen mit dem letzten Licht-fällt-ein-/Licht-versperrt-Muster der optischen Achsen des Sicherheitsmanagementsensors (100) übereinstimmt, und das Steuermittel (10, 20) dazu eingerichtet ist, das Ausgangssignal von dem Sicherheitsmanagementsensor (100) auf den Aus-Zustand zu setzen, wenn keines der Muster in dem Erfassungsmusterinformationsmittel mit dem letzten Licht-fällt-ein-/Licht-versperrt-Muster der optischen Achsen des Sicherheitsmanagementsensors (100) übereinstimmt.

11. Mehrere optische Achsen aufweisender photoelektrischer Sensor (100) nach Anspruch 10, ferner aufweisend
ein Rücksetzmittel zum Erfassen eines Übergangs von einem Zustand, in dem sich mindestens eine der optischen Achsen mindestens des Sperrsensors (200, 200A, 200B) in dem Licht-versperrt-Zustand befindet, in den Zustand, in dem sich alle optischen Achsen jedes Sensors (200, 200A, 200B) in dem Licht-fällt-ein-Zustand befinden, basierend auf den Licht-fällt-ein-/Licht-versperrt-Mustern der optischen Achsen des Sicherheitsmanagementsensors (100) und des Sperrsensors (200, 200A, 200B), und zum Rücksetzen der im Erfassungsmuster-Akkumulationsmittel akkumulierten Informationen als Reaktion auf diese Erfassung.

## Revendications

1. Système de gestion de sécurité, comprenant :
au moins deux capteurs photoélectriques à axes optiques multiples (100, 200) disposés le long d'un trajet de transport d'un objet transporté par une machine de transport en direction d'une zone de danger, chaque capteur des capteurs photoélectriques à axes optiques multiples (100, 200) comprenant un projecteur (101, 201) et un récepteur optique (102, 202) qui sont disposés verticalement tout en se faisant face de part et d'autre du trajet de transport, chaque capteur des capteurs photoélectriques à axes optiques multiples comprenant plusieurs axes optiques, un axe optique se trouvant dans l'un ou l'autre d'un état d'entrée de lumière ou d'un état d'obstruction de lumière,
un capteur des deux capteurs photoélectriques à axes optiques multiples (100, 200) situé d'un côté aval dans un sens de transport de l'objet agissant en tant que capteur de gestion de sécurité (100), le capteur de gestion de sécurité (100) étant conçu pour délivrer un signal qui est fixé à un état haut ou à un état bas, dans lequel le signal de sortie du capteur de gestion de sécurité (100) est fixé à un état haut lorsque tous les axes optiques du capteur de gestion de sécurité (100) sont dans un état d'entrée de lumière, et dans lequel le capteur de gestion de sécurité (100) est configuré pour interrompre un transport par la machine de transport lorsque le signal de sortie du capteur de gestion de sécurité est fixé à un état bas, l'autre capteur photoélectrique à axes optiques multiples (200) agissant en tant que capteur de mise en sommeil (200, 200A, 200B) par rapport au capteur de gestion de sécurité (100),
le système de gestion de sécurité comprenant en outre :
un moyen d'accumulation de motifs de détection destiné à accumuler des informations de motifs de détection représentant un motif d'entrée/d'obstruction de lumière des axes optiques du capteur de mise en sommeil (200, 200A, 200B) tandis qu'au moins l'un des axes optiques du capteur de mise en sommeil (200, 200A, 200B) est dans l'état d'obstruction de lumière ; et
un moyen de commande (10, 20) destiné à déterminer si un changement du motif d'entrée/d'obstruction de lumière des axes optiques du capteur de gestion de sécurité (100) correspond à un changement indiqué par les informations de motifs de détection accumulées par le moyen d'accumulation de motifs de détection tandis qu'au moins l'un des axes optiques du capteur de gestion de sécurité (100) est dans l'état d'obstruction de lumière, à fixer une sortie du capteur de gestion de sécurité (100) à l'état haut lors de la détermination du fait que les changements correspondent l'un à l'autre, et à fixer la sortie du capteur de gestion de sécurité (100) à l'état bas lors de la détermination du fait que les changements ne correspondent pas l'un à l'autre,
le système de gestion de sécurité étant **caractérisé en ce que**
à chaque fois que change le motif d'entrée/d'obstruction de lumière des axes optiques du capteur de mise en sommeil (200, 200A, 200B), le moyen d'accumulation de motifs de détection est configuré pour mémoriser des informations de motifs de détection représentant le motif après changement du motif d'entrée/d'obstruction de lumière des axes optiques du capteur de mise en sommeil (200, 200A, 200B) tandis qu'au moins l'un des axes optiques du capteur de mise en sommeil (200, 200A, 200B) est dans l'état d'obstruction de lumière,
tandis qu'au moins l'un des axes optiques du capteur de gestion de sécurité (100) est dans l'état d'obstruction de lumière, le moyen de commande (10, 20) est configuré pour mettre en œuvre un traitement de comparaison du dernier motif d'entrée/d'obstruction de lumière des axes optiques du capteur de gestion de sécurité (100) aux informations de motifs de détection accumulées dans le moyen d'accumulation de motifs de détection dans un ordre chronologique d'accumulation des informations de motifs de détection pour faire correspondre un motif des informations de motifs de détection au dernier motif d'entrée/d'obstruction de lumière des axes optiques du capteur de gestion de sécurité (100), le moyen de commande (10, 20) est configuré pour supprimer le motif des informations de motifs de détection qui ne correspond pas au dernier motif d'entrée/d'obstruction de lumière des axes optiques du capteur de gestion de sécurité (100), le moyen de commande (10, 20) est configuré pour fixer la sortie du capteur de gestion de sécurité (100) à l'état haut lorsqu'un motif des informations de motifs de détection correspond au dernier motif d'entrée/d'obstruction de lumière des axes optiques du capteur de gestion de sécurité (100), et le moyen de commande (10, 20) est configuré pour fixer la sortie du capteur de gestion de sécurité (100) à l'état bas lorsqu'aucun des motifs des informations de motifs de détection accumulées dans le moyen d'accumulation de motifs de détection ne correspond au dernier motif d'entrée/d'obstruction de lumière des axes optiques du capteur de gestion de sécurité (100).

2. Système de gestion de sécurité selon la revendication 1, comprenant en outre un moyen de réinitialisation destiné à détecter un passage d'un état, dans lequel au moins l'un des axes optiques d'au moins le capteur de mise en sommeil (200, 200A, 200B) est dans l'état d'obstruction de lumière, à l'état dans lequel tous les axes optiques de chaque capteur (200, 200A, 200B) sont dans l'état d'entrée de lumière sur la base des derniers motifs d'entrée/d'obstruction de lumière des axes optiques du capteur de gestion de sécurité (100) et du capteur de mise en sommeil (200, 200A, 200B), et à effacer les informations accumulées dans le moyen d'accumulation de motifs de détection en réponse à cette détection.

3. Système de gestion de sécurité selon la revendication 1, dans lequel le moyen de commande (10, 20) est configuré pour mettre en œuvre le traitement de comparaison du dernier motif d'entrée/d'obstruction de lumière des axes optiques du capteur de gestion de sécurité (100) aux informations de motifs de détection qui ont été accumulées à partir d'un instant qui correspond à une période de temps prédéterminée antérieure à un instant courant des informations de motifs de détection accumulées par le moyen d'accumulation de motifs de détection, et le moyen de commande (10, 20) est configuré pour extraire un quelconque motif des informations de motifs de détection accumulées qui correspond au dernier motif d'entrée/d'obstruction de lumière des axes optiques du capteur de gestion de sécurité (100).

4. Système de gestion de sécurité selon la revendication 3, dans lequel le moyen de commande (10, 20) effectue le traitement de comparaison tandis qu'une erreur admissible prédéterminée existe entre le dernier motif d'entrée/d'obstruction de lumière des axes optiques du capteur de gestion de sécurité (100) et les informations de motifs de détection accumulées dans le moyen d'accumulation de motifs de détection par rapport à une position de limite des axes optiques dans l'état d'obstruction de lumière et des axes optiques dans l'état d'entrée de lumière.

5. Système de gestion de sécurité selon la revendication 1, comprenant en outre
un moyen d'enregistrement destiné à enregistrer, en tant que données de référence, un ensemble d'informations de motifs de détection qui représente un changement du motif d'entrée/d'obstruction de lumière généré dans les axes optiques du capteur de mise en sommeil (200, 200A, 200B) tandis que l'objet qui a l'autorisation d'être transporté vers la zone de danger traverse une zone de détection du capteur de mise en sommeil (200, 200A, 200B), dans lequel
le moyen de commande (10, 20) comprend un moyen destiné à comparer les informations de motifs de détection du capteur de mise en sommeil (200, 200A, 200B) aux données de référence tandis qu'au moins l'un des axes optiques du capteur de mise en sommeil (200, 200A, 200B) est dans l'état d'obstruction de lumière, et le moyen de commande (10, 20) fixe la sortie du capteur de gestion de sécurité (100) à l'état bas lorsque le moyen de commande (10, 20) détermine, en raison de cette comparaison, que les informations de motifs de détection ne correspondent pas aux données de référence.

6. Système de gestion de sécurité selon la revendication 1, dans lequel
le moyen d'accumulation de motifs de détection et le moyen de commande (10, 20) sont disposés dans le capteur de gestion de sécurité (100), le système de gestion de sécurité comprend un moyen de communication (14, 24) destiné à établir une communication entre le capteur de gestion de sécurité (100) et le capteur de mise en sommeil (200, 200A, 200B), et le moyen de communication (14, 24) est disposé dans chacun du capteur de gestion de sécurité (100) et du capteur de mise en sommeil (200, 200A, 200B),
le capteur de mise en sommeil (200, 200A, 200B) est configuré pour transmettre les informations de motifs de détection indiquant le motif d'entrée/d'obstruction de lumière des axes optiques du capteur de mise en sommeil (200, 200A, 200B) au capteur de gestion de sécurité (100) par l'intermédiaire du moyen de communication (14, 24), et le moyen d'accumulation de motifs de détection du capteur de gestion de sécurité (100) est configuré pour accumuler les informations de motifs de détection transmises à partir du capteur de mise en sommeil (200, 200A, 200B).

7. Système de gestion de sécurité selon la revendication 6, dans lequel
chacun du capteur de gestion de sécurité (100) et du capteur de mise en sommeil (200, 200A, 200B) comprend une mémoire non volatile dans laquelle sont mémorisées les informations de motifs de détection représentant le dernier motif d'entrée/d'obstruction de lumière des axes optiques de chacun du capteur de gestion de sécurité (100) et du capteur de mise en sommeil (200, 200A, 200B), un indicateur d'état de mise en sommeil indiquant qu'une sortie est fixée à l'état haut tandis qu'au moins l'un des axes optiques du capteur de gestion de sécurité (100) est dans l'état d'obstruction de lumière étant mémorisé dans la mémoire non volatile du capteur de gestion de sécurité (100),
lorsque l'indicateur d'état de mise en sommeil est fixé à l'état haut à l'instant auquel le capteur de gestion de sécurité (100) est mis sous tension, le moyen de commande (10, 20) est configuré pour maintenir la fixation de l'indicateur d'état de mise en sommeil de façon à fixer la sortie du capteur de gestion de sécurité (100) à l'état haut à condition qu'au moins l'un des axes optiques du capteur de gestion de sécurité (100) soit dans l'état d'obstruction de lumière et que le premier motif d'entrée/d'obstruction de lumière de chaque capteur (100) après la mise sous tension corresponde aux informations de motifs de détection mémorisées dans la mémoire non volatile respective, et le moyen de commande (10, 20) est configuré pour réinitialiser l'indicateur d'état de mise en sommeil de façon à fixer la sortie du capteur de gestion de sécurité (100) à l'état bas lorsque cette condition n'est pas satisfaite.

8. Système de gestion de sécurité selon la revendication 6, dans lequel
des capteurs d'une pluralité de capteurs photoélectriques à axes optiques multiples (100, 200) comprenant chacun le moyen d'accumulation de motifs de détection, le moyen de commande (10, 20) et le moyen de communication (14, 24) sont disposés en tant que les capteurs de gestion de sécurité (100) le long du trajet de transport de l'objet, et un capteur photoélectrique à axes optiques multiples (200) comprenant le moyen de communication est disposé en tant que le capteur de mise en sommeil (200, 200A, 200B) d'un côté amont des capteurs de gestion de sécurité (100) dans le sens de transport de l'objet.

9. Système de gestion de sécurité selon la revendication 6, dans lequel
un capteur de gestion de sécurité (100) comprenant le moyen d'accumulation de motifs de détection, le moyen de commande (10, 20) et le moyen de communication (14, 24) et deux capteurs de mise en sommeil (200, 200A, 200B) comportant chacun le moyen de communication (14, 24) sont disposés le long du trajet de transport de l'objet transporté en direction de la zone de danger, le capteur de gestion de sécurité (100) étant situé entre les capteurs de mise en sommeil (200, 200A, 200B), et
le moyen d'accumulation de motifs de détection accumule les premières informations de motifs de détection transmises à partir de l'un des deux capteurs de mise en sommeil (200, 200A, 200B), les informations de motifs de détection indiquant la présence de l'axe optique dans l'état d'obstruction de lumière.

10. Capteur photoélectrique à axes optiques multiples (100) destiné à être utilisé en tant que le capteur de gestion de sécurité (100) du système de gestion de sécurité selon la revendication 1, dans lequel des axes d'une pluralité d'axes optiques sont disposés entre un projecteur (101, 201) et un récepteur optique (102, 202) qui sont disposés en regard l'un de l'autre, le capteur photoélectrique à axes optiques multiples (100) étant configuré pour délivrer un signal qui est fixé à un état haut ou à un état bas,
le capteur photoélectrique à axes optiques multiples (100) comprenant :
un moyen d'entrée d'informations dans lequel il est possible d'entrer des informations de motifs de détection en établissant une communication avec un autre capteur photoélectrique à axes optiques multiples (200) disposé en tant que capteur de mise en sommeil (200, 200A, 200B), les informations de motifs de détection représentant un motif d'entrée/d'obstruction de lumière des axes optiques du capteur de mise en sommeil (200, 200A, 200B) ; et
un moyen de commande (10, 20) destiné à déterminer si un changement du motif d'entrée/d'obstruction de lumière des axes optiques du capteur de gestion de sécurité (100) correspond à un changement du motif d'entrée/d'obstruction de lumière indiqué par les informations de motifs de détection entrées dans le moyen d'entrée d'informations tandis qu'au moins l'un des axes optiques du capteur (100) est dans l'état d'obstruction de lumière, à fixer le signal de sortie à l'état haut lorsque les changements correspondent l'un à l'autre, et à fixer le signal de sortie à l'état bas lorsque les changements ne correspondent pas l'un à l'autre,
le capteur photoélectrique à axes optiques multiples (100) étant **caractérisé en ce qu'**il comprend en outre :
un moyen d'accumulation de motifs de détection destiné à mémoriser des informations de motifs de détection après changement à chaque fois que changent les informations de motifs de détection qui sont entrées par l'intermédiaire d'une communication avec le capteur de mise en sommeil (200, 200A, 200B) par le moyen d'entrée d'informations, dans lequel
tandis qu'au moins l'un des axes optiques du capteur de gestion de sécurité (100) est dans l'état d'obstruction de lumière, le moyen de commande (10, 20) est configuré pour mettre en œuvre un traitement de comparaison du dernier motif d'entrée/d'obstruction de lumière des axes optiques du capteur de gestion de sécurité (100) aux informations de motifs de détection accumulées dans le moyen d'accumulation de motifs de détection dans un ordre chronologique d'accumulation des informations de motifs de détection pour faire correspondre un motif des informations de motifs de détection au dernier motif d'entrée/d'obstruction de lumière des axes optiques du capteur de gestion de sécurité (100), le moyen de commande (10, 20) est configuré pour supprimer le motif des informations de motifs de détection qui ne correspond pas au dernier motif d'entrée/d'obstruction de lumière des axes optiques du capteur de gestion de sécurité (100), le moyen de commande (10, 20) est configuré pour fixer le signal de sortie du capteur de gestion de sécurité (100) à l'état haut lorsqu'un motif des informations de motifs de détection correspond au dernier motif d'entrée/d'obstruction de lumière des axes optiques du capteur de gestion de sécurité (100), et le moyen de commande (10, 20) est configuré pour fixer le signal de sortie du capteur de gestion de sécurité (100) à l'état bas lorsqu'aucun des motifs des informations de motifs de détection accumulées dans le moyen d'accumulation de motifs de détection ne correspond au dernier motif d'entrée/d'obstruction de lumière des axes optiques du capteur de gestion de sécurité (100).

11. Capteur photoélectrique à axes optiques multiples (100) selon la revendication 10, comprenant en outre
un moyen de réinitialisation destiné à détecter un passage d'un état, dans lequel au moins l'un des axes optiques d'au moins le capteur de mise en sommeil (200, 200A, 200B) est dans l'état d'obstruction de lumière, à l'état dans lequel tous les axes optiques de chaque capteur (200, 200A, 200B) sont dans l'état d'entrée de lumière sur la base des motifs d'entrée/d'obstruction de lumière des axes optiques du capteur de gestion de sécurité (100) et du capteur de mise en sommeil (200, 200A, 200B), et à réinitialiser les informations accumulées dans le moyen d'accumulation de motifs de détection en réponse à cette détection.
